(19) Europäisches Patentamt / European Patent Office / Office européen des brevets

(11) **EP 4 524 192 A1**

(12) **EUROPEAN PATENT APPLICATION**
published in accordance with Art. 153(4) EPC

(43) Date of publication:
**19.03.2025 Bulletin 2025/12**

(21) Application number: **23803540.6**

(22) Date of filing: **08.05.2023**

(51) International Patent Classification (IPC):
***C08L 9/04*** *(2006.01)* ***A41D 19/04*** *(2006.01)*
***B29C 41/14*** *(2006.01)* ***C08J 3/20*** *(2006.01)*
***C08J 5/02*** *(2006.01)* ***C08K 3/22*** *(2006.01)*
***C08K 5/00*** *(2006.01)* ***C08K 5/29*** *(2006.01)*
***C08K 5/36*** *(2006.01)* ***C08L 63/00*** *(2006.01)*
***C08L 101/02*** *(2006.01)*

(52) Cooperative Patent Classification (CPC):
**C08K 5/375; A41D 19/0055; A41D 19/04; B29C 41/14; C08J 3/20; C08J 5/02; C08K 3/06; C08K 3/22; C08K 5/00; C08K 5/0025; C08K 5/13; C08K 5/29; C08K 5/36; C08K 5/37; C08K 5/47;**
(Cont.)

(86) International application number:
**PCT/JP2023/017315**

(87) International publication number:
**WO 2023/219063 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.05.2022 JP 2022076972**
**13.01.2023 JP 2023003683**

(71) Applicant: **Midori Anzen Co., Ltd.**
**Tokyo 150-8455 (JP)**

(72) Inventors:
- **IKEDA Keisuke**
  **Tokyo 150-8455 (JP)**
- **HOSHINO Sayaka**
  **Tokyo 150-8455 (JP)**
- **KANAMORI Wataru**
  **Tokyo 150-8455 (JP)**
- **MATSUI Masahiro**
  **Tokyo 150-8455 (JP)**
- **TAKEUCHI Yamato**
  **Tokyo 150-8455 (JP)**
- **KUBONO Yugo**
  **Tokyo 150-8455 (JP)**
- **ENOMOTO Norihide**
  **Tokyo 150-8455 (JP)**

(74) Representative: **Grünecker Patent- und Rechtsanwälte**
**PartG mbB**
**Leopoldstraße 4**
**80802 München (DE)**

(54) **COMPOSITION AND GLOVE FOR DIP MOLDING, AND METHODS FOR PRODUCING COMPOSITION AND GLOVE FOR DIP MOLDING**

(57) Provided is a sulfur-free crosslinked composition for dip forming, including: a carboxylated diene rubber elastomer; a crosslinking agent that contains at least one of an organic crosslinking agent or a metal crosslinking agent with a valence of two or more; an antioxidant that contains at least one compound having a phenol structure and a sulfur atom; and water, wherein an amount of the at least one compound is 0.05 to 4 parts by weight relative to 100 parts by weight of the elastomer.

FIG. 1

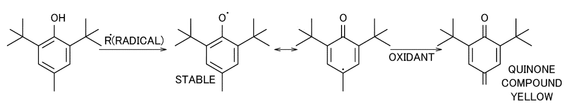


EP 4 524 192 A1



(Cont. next page)

(52) Cooperative Patent Classification (CPC): (Cont.)
**C08L 9/02; C08L 9/04; C08L 63/00; C08L 101/02;**
C08L 2201/08; C08L 2201/52; C08L 2312/00

## Description

TECHNICAL FIELD

The present disclosure relates to a composition for dip forming and a glove, and a method for manufacturing a composition for dip forming and a method for manufacturing a glove.

BACKGROUND ART

Rubber gloves are widely used in various industrial and medical fields. Natural latex and synthetic latex are used as elastomers for rubber gloves. These include diene rubbers such as natural rubber (NR), polyisoprene rubber (IR), chloroprene rubber (CR), styrenebutadiene rubber (SBR), nitrile-butadiene rubber (NBR), carboxylated acrylonitrile-butadiene rubber (XNBR). Gloves manufactured through dip forming in which these elastomers are crosslinked with sulfur and a vulcanization accelerator have been common. Among them, the most commonly used gloves are those in which a double bond of butadiene of XNBR is sulfur-vulcanized and a carboxyl group is crosslinked with zinc oxide.

However, these sulfur crosslinked gloves have an issue of causing type I allergies due to protein contained in natural rubber and type IV allergies due to a vulcanization accelerator accompanying sulfur vulcanization even in synthetic rubber.

Thus, what are called accelerator-free gloves containing no vulcanization accelerator have been developed by using sulfur-free crosslinking on carboxylated diene rubber. This includes a method for crosslinking a carboxyl group of carboxylated diene rubber with an organic crosslinking agent or a metal crosslinking agent, and a method for incorporating a crosslinkable organic compound during polymerization and, causing latex to perform, what is called, self-crosslinking. Practically used gloves include polycarbodiimide crosslinked gloves, epoxy crosslinked gloves, aluminum crosslinked gloves, and several kinds of self-crosslinked gloves. These gloves are manufactured using an anode coagulant dipping process, what is called a dip forming method. Note that conventionally there have been various types of sulfur-free crosslinking such as peroxide crosslinking, but all of them have been unsuitable for glove manufacturing using dip forming.

**In** order to prevent the aging of these rubber gloves, antioxidants have been used in consideration of their types, safety to the human body, environments in which deterioration occurs, and manufacturing methods. **In** rubber gloves, phenolic primary antioxidants with low staining, especially hindered phenolic primary antioxidants such as Wingstay (registered trademark), have generally been used. Amine antioxidants have not been used from the viewpoint of staining.

Patent Literature 1 discloses an example of using a hindered phenolic antioxidant of Wingstay (registered trademark) in sulfur crosslinking.

Patent Literature 2 presents a method for manufacturing gloves prepared for a step of irradiation with radiation, by dip-forming an accelerator-free latex composition containing a carboxyl group-containing conjugated diene rubber latex, an aluminum crosslinking agent, and a hindered phenolic antiaging agent. Patent Literature 2 proposes that the content of the hindered phenolic antiaging agent be 0.5% by weight or more and 7.0% by weight or less.

Patent Literature 3 discloses an accelerator-free glove in which carboxylated acrylonitrile butadiene is crosslinked with polycarbodiimide. **In** Patent Literature 3, a phenolic antioxidant of a butylated reaction product (BPC) of p-cresol and cyclopentadiene, and 2,2'-methylene-bis-(4-methyl-6-butylphenol) (MBPC) are used.

Patent Literature 4 discloses an accelerator-free glove in which carboxylated acrylonitrile butadiene is crosslinked with an epoxy crosslinking agent. Patent Literature 4 describes that an antioxidant of the hindered phenol type such as Wingstay (registered trademark) L can be used as an antioxidant.

Non-Patent Literature 1 describes a method for manufacturing a conventional carboxylated diene rubber glove using sulfur vulcanization, in which a non-staining phenolic compound is frequently used as an antiaging agent. (See 3.2.4 on page 2)

Non-Patent Literature 2 describes the development status of nitrile gloves without using vulcanization accelerators.

CITATION LIST

PATENT LITERATURE

Patent Literature 1: Japanese Translation of PCT International Application Publication No. JP-H-11-509873
Patent Literature 2: WO 2020/066835
Patent Literature 3: Japanese Unexamined Patent Application Publication No. 2017-213914
Patent Literature 4: WO 2019/102985

NON-PATENT LITERATURE

Non-Patent Literature 1: Tetsuya Akabane, "Production Method and Market Trend of Rubber Gloves", 2015, Journal of THE SOCIETY OF RUBBER SCIENCE AND TECHNOLOGY, JAPAN, Vol. 88 No. 9
Non-Patent Literature 2: Norihide Enomoto, "Development of Accelerator-Free Nitrile Glove", 2016, Manufacturing & Technology, Vol. 68 No. 4

SUMMARY OF THE INVENTION

Rubber gloves are subjected to aging tests in accordance with ASTM D6319 (standard specification for nitrile examination gloves for medical application) to ensure quality assurance against deterioration of rubber. Specific criteria are 70 °C for 168 hours, tensile strength after aging of 14 MPa or more, and elongation of 400% or more. (See page 2 of ASTM D6319, 7.5.2 Accelerated Aging.)

By passing these criteria, it was thought that the quality of rubber gloves could be maintained for about three years. Accelerator-free gloves, which are now in practical use, have also been sold after meeting these criteria.

Powder-coated gloves with powder on the inside of the rubber gloves have been conventionally common to make the gloves easier to wear. However, since powder is harmful, especially in medical gloves, the glove surface is subjected to chlorination so as to remove a slimy feeling in an online step after the glove has been molded on a hand mold. Then, the glove is pulled from the hand mold, and when the glove is turned inside out, the chlorinated surface is positioned inside the glove.

In addition, for clean room gloves, further smoothing is performed on the glove surface, dust generation is reduced, and chlorination is performed offline to prevent metal from being eluted and transferred from the glove surface to the product to be handled.

The development according to the present disclosure began by investigating a response to the issue that aluminum crosslinked gloves for clean room use, which are accelerator-free gloves, became brown within a few months of manufacture. It was also found that the same issue occurred with epoxy crosslinked gloves and polycarbodiimide crosslinked gloves.

The present disclosure is made in view of this kind of issue of a sulfur-free crosslinked glove. It is an object of the present disclosure to provide a glove capable of suppressing at least one of: the deterioration of mechanical properties such as tensile strength and elongation; or the occurrence of yellowing over time, and to provide a composition for dip forming used for manufacturing the glove and methods for manufacturing a composition for dip forming and a glove.

A sulfur-free crosslinked composition for dip forming according to an aspect of the present disclosure includes a carboxylated diene rubber elastomer, a crosslinking agent that contains at least one of an organic crosslinking agent or a metal crosslinking agent with a valence of two or more, an antioxidant that contains at least one compound having a phenol structure and a sulfur atom, and water, wherein an amount of the at least one compound is 0.05 to 4 parts by weight relative to 100 parts by weight of the elastomer.

The carboxylated diene rubber elastomer may be an elastomer containing, in a polymer main chain, a structural unit derived from (meth)acrylonitrile, a structural unit derived from an unsaturated carboxylic acid, and a structural unit derived from butadiene.

The at least one compound may contain at least one compound that has the phenol structure, and at least one selected from the group consisting of a thioether structure, a polysulfide structure, and a thiol structure.

The at least one compound may contain at least one compound that has the phenol structure, and a thioether structure or a polysulfide structure.

The at least one compound may contain a compound that has both of the phenol structure and the sulfur atom in the same molecule.

The at least one compound may contain two or more compounds of a compound having the phenol structure and a compound having the sulfur atom.

The organic crosslinking agent may contain at least one of polycarbodiimide or an epoxy compound.

The metal crosslinking agent with a valence of two or more may contain at least one of a zinc compound or an aluminum compound.

A method for manufacturing a sulfur-free crosslinked composition for dip forming according to another aspect of the present disclosure includes a step of mixing a carboxylated diene rubber elastomer, a crosslinking agent containing at least one of an organic crosslinking agent or a metal crosslinking agent with a valence of two or more, and an antioxidant containing at least one compound having a phenol structure and a sulfur atom, wherein an amount of the at least one compound is 0.05 to 4 parts by weight relative to 100 parts by weight of the elastomer, and the at least one compound is added to the elastomer in a dispersion state dispersed in an aqueous solvent.

The carboxylated diene rubber elastomer may be an elastomer having, in a polymer main chain, a structural unit derived from (meth)acrylonitrile, a structural unit derived from an unsaturated carboxylic acid, and a structural unit derived from butadiene.

A glove according to another aspect of the present disclosure includes a sulfur-free crosslinked elastomer that is a carboxylated diene rubber elastomer, a crosslinking agent that contains at least one of an organic crosslinking agent or a metal crosslinking agent with a valence of two or more, and an antioxidant that is dispersed in the sulfur-free crosslinked elastomer, and contains at least one compound having a phenol structure and a sulfur atom, wherein an amount of the at least one compound is 0.05 to 4 parts by weight relative to 100 parts by weight of the sulfur-free crosslinked elastomer.

The carboxylated diene rubber elastomer may be a sulfur-free crosslinked elastomer containing, in a polymer main chain, a structural unit derived from (meth)acrylonitrile, a structural unit derived from an unsaturated carboxylic acid, and a structural unit derived from butadiene.

A method for manufacturing a glove according to another aspect of the present disclosure includes a step of dip-forming the glove with the composition for dip forming.

## BRIEF DESCRIPTION OF DRAWINGS

[FIG. 1] FIG. 1 is a diagram illustrating an example of a typical yellowing mechanism caused by dibutylhydroxytoluene (BHT), which is an antioxidant.
[FIG. 2] FIG. 2 is a graph illustrating the relationship between heating time and the color difference of specimens in examples 1 to 4 and comparative examples 1 to 5.
[FIG. 3] FIG. 3 is a graph illustrating the relationship between heating time and the color difference of specimens of examples 5 to 10 and comparative example 6.
[FIG. 4] FIG. 4 is a graph illustrating the relationship between heating time and elongation at break of the specimens of examples 5 to 10 and comparative example 6.
[FIG. 5] FIG. 5 is a graph illustrating the relationship between chlorination time and tensile strength at break of gloves of example 11 and comparative example 7.

## DETAILED DESCRIPTION OF THE INVENTION

As described above, the development of the present disclosure began by examining a response to the issue of aluminum crosslinked gloves for clean rooms, which are accelerator-free gloves, becoming brown within a few months after manufacture. In addition, when the polycarbodiimide crosslinked gloves were subjected to offline chlorination for making them suitable for clean rooms, the issue that cracks occurred in glove films during the treatment also occurred. In order to solve these issues, trial and error was carried out with respect to treatment conditions after online and offline chlorination of gloves, especially conditions such as water washing, neutralization, and the reducing agent. It was also found that such issues do not occur often in sulfur-vulcanized gloves. Consequently, it was found that these phenomena are mainly common issues in sulfur-free crosslinked gloves (accelerator-free gloves).

After investigating the reason why sulfur-free crosslinked gloves exhibit greater yellowing over time than sulfur crosslinked gloves, it has been found that sulfur-free crosslinked gloves are more susceptible to oxidation and deterioration than sulfur crosslinked gloves. One reason for this is that in sulfur crosslinked gloves, a polysulfide part used for crosslinking is oxidized instead of the main chain, and the oxidative deterioration of the rubber gloves themselves is suppressed. Another reason is that in sulfur crosslinked gloves, the vulcanization accelerator itself is effective as an antioxidant. In contrast, since sulfur-free crosslinked gloves do not contain a polysulfide part for crosslinking and do not have a vulcanization accelerator added, they do not have the above antioxidant function.

Generally, oxidative deterioration of rubber proceeds through the production of radicals due to oxygen in the air, which causes a chain reaction and also produces a peroxide. To prevent the oxidative deterioration of rubber, it is necessary to suppress the radical chain reaction and decompose the peroxide. A compound containing a phenol structure can suppress a chain reaction by forming stable radicals. A compound containing a sulfur atom can decompose a peroxide. In the case where sulfur crosslinking using a sulfur-containing compound for a crosslinking treatment or a vulcanization accelerator containing a sulfur atom is used, the above two oxidative deteriorations can be suppressed by adding an antioxidant having a phenol structure. However, when a compound containing a sulfur atom is not used for the crosslinking treatment, the peroxide cannot be decomposed even though the radical chain reaction is suppressed. FIG. 1 illustrates an example of a typical yellowing mechanism that occurs with dibutylhydroxytoluene (BHT), which is a typical antioxidant. When only a compound having a phenol structure that suppresses the radical chain reaction is used, oxidative deterioration and discoloration of rubber cannot be effectively prevented because there is no compound that decomposes the peroxide.

Thus, it was found that the yellowing of gloves over time is suppressed by using an antioxidant having a radical chain reaction suppression function and a peroxide decomposition function at a predetermined ratio. Developing the suppression of a radical chain reaction and peroxide decomposition are effective in stopping the sequential reaction illustrated in FIG. 1, for example, and are particularly effective in preventing oxidative deterioration and discoloration of rubber. With the above same mechanism, it is thought that the use of the antioxidant may also suppress the deterioration of mechanical properties over time.

Meanwhile, rubber gloves are subjected to chlorination online or offline as necessary. Chlorination is particularly important for rubber gloves to be used in clean rooms and other environments where dust and waste components are disliked. Chlorine dissolves in water to produce hypochlorous acid (HClO) and hydrochloric acid (HCl), as shown by the reaction formula $Cl_2 + H_2O \rightarrow HClO + HCl$. Hypochlorous acid partially oxidizes nitrile rubber, and reduces the adhesiveness. In contrast, hydrochloric acid converts poorly soluble metal salts and metal oxides on the glove surface into metal chlorides. Generally, metal chlorides are soluble in water, and residual metals can be removed from the glove surface by washing with water such as ion exchanged water. In online chlorination of rubber gloves, by reducing the adhesiveness of the inside of gloves and making it hard, it is possible to increase the slipperiness and improve the wearability of gloves.

Offline chlorination reduces the adhesiveness of the outside of the glove and adjusts the gripping property since the inside of the glove reverses when the glove is detached from the former (glove mold), and also converts metal compounds into a water-soluble metal chloride by means of HCl, thereby facilitating washing of the glove surface with deionized water in the later process. After this treatment, chlorine is reduced and neutralized by sodium thiosulfate as a reducing agent and KOH or sodium carbonate as alkaline agents.

The chlorine component used for the above-described chlorination remains partly in the rubber glove even after the last reduction and neutralization treatment, causing aging of the rubber glove. A chlorine radical generated from derivatives such as chlorine and hypochlorous acid draws out allyl hydrogen in nitrile rubber and produces an allyl radical species in the main chain of latex. When this radical reacts with oxygen, a peroxide radical (R-OO·) is generated in the same manner as oxidative aging due to oxygen, and this peroxide radical causes a radical chain reaction, thereby promoting aging of rubber gloves. Thus, the generation of the radical due to a chlorine species remaining in gloves after chlorination has the same effect of aging rubber gloves as oxygen in air. Therefore, in order to prevent aging and deterioration of rubber gloves due to residual chlorine, it is important to prevent both the radical chain reaction and the accompanying oxidation reaction by the peroxide, as in the case of aging due to oxygen. Hereinafter, a composition for dip forming according to the present embodiment and a method for manufacturing the composition, and a glove and a method for manufacturing the glove will be described in detail.

[Composition for dip forming]

A composition for dip forming according to the present embodiment is used as a dipping liquid as a raw material for gloves. The composition for dip forming contains an elastomer, a crosslinking agent, an antioxidant, and water. Each component will be described in detail below.

<Elastomer>

The elastomer according to the present disclosure is directed to a carboxylated diene rubber elastomer. The carboxylated diene rubber is directed to a synthetic latex obtained by carboxylating at least one selected from the group consisting of polyisoprene rubber (IR), chloroprene rubber (CR), styrene butadiene rubber (SBR), and nitrile butadiene rubber (NBR). All of these were conventionally dip-formed with sulfur and a vulcanization accelerator for manufacturing gloves. A carboxylated diene rubber elastomer can be produced through polymerization of a conjugated diene monomer and carboxylation modification. As the conjugated diene monomer, for example, a conjugated diene monomer of 4 to 6 carbon atoms such as 1,3-butadiene, isoprene, 2,3-dimethyl-1, 3-butadiene, 1,3-pentadiene, and chloroprene is preferable, 1,3-butadiene and isoprene are more preferable, and 1,3-butadiene is particularly preferable. One conjugated diene monomer may be used alone, and two or more conjugated diene monomers may be used in combination.

In the present embodiment, carboxylated acrylonitrile butadiene rubber (XNBR), which is most commonly used in gloves, will be specifically described as a carboxylated diene rubber elastomer. The carboxylated diene rubber elastomer may, for example, include, in the polymer main chain, a structural unit derived from (meth)acrylonitrile, a structural unit derived from an unsaturated carboxylic acid, and a structural unit derived from butadiene. Note that the concept is that (meth)acrylonitrile includes both acrylonitrile and methacrylonitrile.

In the elastomer, the structural unit derived from (meth)acrylonitrile may be 20% to 40% by weight. That is, in the elastomer, a (meth)acrylonitrile residue may be 20% to 40% by weight. By setting the (meth)acrylonitrile-derived structural unit to 20% by weight or more, the strength and chemical resistance of gloves can be improved. By setting the (meth) acrylonitrile-derived structural unit to 40% by weight or less, gloves can be made flexible. The (meth)acrylonitrile-derived

structural unit may be 25% by weight or more, or 30% by weight or more.

In the elastomer, the structural unit derived from an unsaturated carboxylic acid may be 1% to 10% by weight. That is, in the elastomer, an unsaturated carboxylic acid residue may be 1% to 10% by weight. By setting the unsaturated carboxylic acid-derived structural unit to 1% to 10% by weight, a suitable crosslinking structure can be formed and the physical properties of gloves can be maintained well. The unsaturated carboxylic acid-derived structural unit may be 4% by weight or more. The unsaturated carboxylic acid-derived structural unit may be 6% by weight or less. The unsaturated carboxylic acid is not particularly limited and may be a monocarboxylic acid or a polycarboxylic acid. The unsaturated carboxylic acid may be acrylic acid, methacrylic acid, crotonic acid, maleic acid, or fumaric acid. Among these, acrylic acid or methacrylic acid is preferable.

In the elastomer, the structural unit derived from butadiene may be 50% to 75% by weight. That is, in the elastomer, the butadiene residue may be 50% to 75% by weight. By setting the butadiene-derived structural unit to 50% by weight or more, the flexibility of gloves can be improved. The butadiene-derived structural unit may be 60% by weight or more. The butadiene-derived structural unit may be a structural unit derived from 1,3-butadiene.

The polymer main chain may include a structural unit derived from another polymerizable monomer in addition to the (meth)acrylonitrile-derived structural unit, the unsaturated carboxylic acid-derived structural unit, and the butadiene-derived structural unit. In the elastomer, the structural unit derived from another polymerizable monomer may be 30% by weight or less, 20% by weight or less, or 15% by weight or less.

Note that the ratio of the above structural units can be conveniently obtained from the weight ratio (solid fraction ratio) of the raw materials used for manufacturing the elastomer.

The other polymerizable monomer may include at least one of a self-crosslinking compound or a non-self-crosslinking compound. A self-crosslinking compound means a polymerizable compound contained in a polymer chain of an elastomer and a monomer having a functional group capable of forming an intramolecular crosslink or an intermolecular crosslink (hereinafter, collectively referred to simply as "crosslinking"). That is, the self-crosslinking compound is a compound (polymerizable monomer) having a polymerizable unsaturated bond, and one or more functional groups capable of forming a crosslinking bond. This polymerizable monomer may be a monofunctional monomer containing one of these specific functional groups or a polyfunctional monomer containing two or more functional groups. In the case of the polyfunctional monomer, multiple functional groups may be the same or different from each other. The crosslinking bond formed may be, as with an ester bond, an amide bond, an imide bond, and a vinyl bond, formed between a carboxyl group of an unsaturated carboxylic acid and a functional group of a polymerizable monomer or between functional groups of a polymerizable monomer, through an elimination reaction or a substitution reaction.

Examples of the self-crosslinking compound include 2-hydroxyalkyl(meth)acrylate, n-methylolacrylamide, 4-hydroxybutylacrylate glycidyl ether, 2-isocyanate ethyl methacrylate, 3-glycidoxypropylmethoxysilane, 2-(3,4-epoxycyclohexyl)ethylmethoxysilane, vinylmethoxysilane, vinylethoxysilane, vinyltris(2-methoxyethoxy)silane, N-allylacrylamide, glycerin triacrylate, trimethylpropane triacrylate, N-(1,1-dimethyl-3-oxobutyl)acrylamide(diacetone acrylamide), N-(isobutoxymethyl)acrylamide, N-hydroxymethyldiacetone acrylamide, N-formyl-N'-acryloylmethylenediamine, 2-carboxylethyl(meth)acrylate, and mono(2-(meth)acryloyloxyethyl) succinate. Examples of 2-hydroxyalkyl(meth)acrylates include 2-hydroxyethyl(meth)acrylate, 2-hydroxypropyl(meth)acrylate, and 2-hydroxybutyl(meth) acrylate.

The non-self-crosslinking compound is a compound that is polymerizable but not crosslinkable. Examples of the non-self-crosslinking compound include an aromatic vinyl monomer, an ethylenically unsaturated carboxylic acid amide, an ethylenically unsaturated carboxylic acid alkyl ester monomer, and vinyl acetate. Examples of the aromatic vinyl monomer include styrene, $\alpha$-methylstyrene, and dimethylstyrene. Examples of the ethylenically unsaturated carboxylic acid amides include (meth)acrylamide, and N,N-dimethylacrylamide. Examples of the ethylenically unsaturated carboxylic acid alkyl ester monomer include (meth)acrylic acid methyl, (meth)acrylic acid ethyl, (meth)acrylic acid butyl, and (meth)acrylic acid-2-ethylhexyl. These may be used alone, or multiple types may be used in combination. Note that in this specification the concept is that (meth)acrylic includes acrylic and methacrylic.

In addition, the elastomer may not contain a polymerizable functional group and may contain two or more functional groups in a molecule, and thus may contain a multifunctional organic compound that crosslinks polymer chains. The organic crosslinking agent is incorporated into the elastomer in advance during polymerization, and the organic crosslinking agent is not particularly limited as long as it is a non-polymerizable (that is, having no polymerizable unsaturated bond) multifunctional organic compound.

The elastomer can be obtained by emulsion polymerization using a polymerizable monomer containing (meth) acrylonitrile, an unsaturated carboxylic acid, and butadiene, following a prescribed method, and using a polymerization liquid containing an emulsifier, a polymerization initiator, a molecular weight adjusting agent, and water. The solid fraction of the polymerization liquid is preferably 30% to 60% by weight, and more preferably 35% to 55% by weight. The emulsion polymerization liquid after elastomer synthesis can be directly used as an elastomer component for a composition for dipping.

The emulsifier has a hydrophobic group and a hydrophilic group as a surfactant. Examples of the emulsifier include an anionic surfactant such as dodecylbenzene sulfonate and aliphatic sulfonate; and a non-ionic surfactant such

as polyethylene glycol alkyl ether and a polyethylene glycol alkyl ester. Among these, the emulsifier preferably contains an anionic surfactant.

The polymerization initiator is not particularly limited as long as it is a radical initiator, and examples thereof include an inorganic peroxide such as ammonium persulfate and potassium superphosphate; an organic peroxide such as t-butyl peroxide, cumene hydroperoxide, p-menthan hydroperoxide, t-butylcumyl peroxide, benzoyl peroxide, 3,5,5-trimethylhexanoyl peroxide, and t-butyl peroxyisobutyrate; and an azo compound such as azobisisobutyronitrile, azobis-2,4-dimethylvaleronitrile, azobiscyclohexanecarbonitrile, and methyl azobisisobutyrate.

Examples of the molecular weight regulator include a mercaptan such as a t-dodecyl mercaptan and an n-dodecyl mercaptan, and a halogenated hydrocarbon such as carbon tetrachloride, methylene chloride, and methylene bromide. The molecular weight regulator preferably includes a mercaptan such as t-dodecyl mercaptan or n-dodecyl mercaptan.

The latex includes water and an elastomer as a solid fraction. The latex is an emulsion in which elastomer particles surrounded by a film of an emulsifier are dispersed. The outside of the film is hydrophilic, and the inside of the film is hydrophobic. Within the particles, carboxy groups are oriented inside the film.

In the composition for dip forming, the elastomer may be particles. The average particle size of the elastomer may be about 50 to 250 nm. By setting the average particle size to 50 nm or more, the specific surface area becomes large and crosslinking between particles becomes strong. By setting the average particle size to 250 nm or less, syneresis can be reduced. Note that as for the value of "average particle size" in this specification, unless otherwise noted, a value is adopted that is calculated as an average size of the particles observed in several to several tens of visual fields using observation means such as a scanning electron microscope (SEM) or a transmission electron microscope (TEM).

The amount of the elastomer in the composition for dip forming may be 15% by weight or more, or may be 18% by weight or more. The amount of the elastomer in the composition for dip forming may be 35% by weight or less, or may be 30% by weight or less.

<Crosslinking agent>

The crosslinking agent substantially consists of a sulfur-free crosslinking agent. That is, the composition for dip forming substantially contains no sulfur compounds which are a sulfur crosslinking agent and a vulcanization accelerator. The respective amounts of the sulfur crosslinking agent and the vulcanization accelerator contained in the composition for dip forming are, for example, less than 1% by weight, or may be less than 0.1% by weight. Note that an example of the sulfur crosslinking agent is a polysulfide. Examples of a vulcanization accelerator include a dithiocarbamate vulcanization accelerator such as dithiocarbamate, a thiuram vulcanization accelerator such as tetramethylthiuram disulfide (TMTD), a thiazole vulcanization accelerator such as mercaptobenzothiazole (MBT), a sulfenamide vulcanization accelerator, a guanidine vulcanization accelerator, a thiourea vulcanization accelerator, and other sulfur-containing compounds.

An example of a sulfur-free crosslinking structure is crosslinking between carboxy groups which are crosslinked using a sulfur-free crosslinking agent. The sulfur-free crosslinking agent may include at least one of an organic crosslinking agent or a metal crosslinking agent. Such a crosslinking agent can crosslink carboxy groups by reacting with the carboxy groups. The organic crosslinking agent may include at least one of a polycarbodiimide or a polyepoxy compound. The metal crosslinking agent will be described below.

(Polycarbodiimide)

Polycarbodiimide is a compound having multiple carbodiimide groups (-N=C=N-). When a carbodiimide group reacts with a carboxy group of an elastomer, carboxy groups can be crosslinked with each other. The polycarbodiimide can be obtained by decarboxylation condensation of diisocyanate. The number of carbodiimide functional groups (degree of polymerization) per molecule of the polycarbodiimide may be 4 to 20. By setting the degree of polymerization to 4 or more, it is possible to perform multipoint crosslinking between the carboxy groups of the elastomer, and it is expected that fatigue durability will be improved compared with the case of two-point crosslinking. The degree of polymerization may be 5 or more, or may be 9 or more.

The diisocyanate used in the polycarbodiimide synthesis may contain at least one selected from the group consisting of an aromatic diisocyanate, an aliphatic diisocyanate, and an alicyclic diisocyanate. From the viewpoint of weather resistance, the diisocyanate is preferably an aliphatic diisocyanate or an alicyclic diisocyanate. The diisocyanate may include at least one selected from the group consisting of 1,5-naphthylene diisocyanate, 4,4-diphenylmethane diisocyanate, 4,4-diphenyldimethylmethane diisocyanate, 1,3-phenylenediisocyanate, 1,4-phenylenediisocyanate, 2,4-tolylene diisocyanate, 2,6-tolylene diisocyanate, hexamethylene diisocyanate, cyclohexane-1, 4-diisocyanate, xylylene diisocyanate, isophorone diisocyanate, dicyclohexylmethane-4,4'-diisocyanate, methylcyclohexane diisocyanate, and tetramethylxylylene diisocyanate.

The polycarbodiimide may be a compound obtained through decarboxylation condensation of diisocyanate and

having isocyanate residues at both terminals thereof. To suppress the reaction of a carbodiimide group with water, a hydrophilic segment represented by $R^1$-O-($CH_2$-$CHR^2$-O-$)_n$-H may be added to at least part of the isocyanate residues at the terminals (where $R^1$ is an alkyl group having 1 to 4 carbon atoms, $R^2$ is a hydrogen atom or methyl group, and n is an integer of 5 to 30). The hydrophilic segment may be added to both terminals of the polycarbodiimide or only to one terminal thereof. The polycarbodiimide may be a mixture of a polycarbodiimide having a hydrophilic segment and a polycarbodiimide having no hydrophilic segment. In the polycarbodiimide having an effective hydrophilic segment, a micelle is formed in water, and the highly reactive polycarbodiimide portion is positioned in the micelle, thereby suppressing the reaction with water.

A terminal of the polycarbodiimide without a hydrophilic segment added may be sealed with a sealant represented by $(R^3)_2N$-$R^4$-OH (wherein $R^3$ is an alkyl group having 6 or less carbon atoms, and $R^4$ is an alkylene or polyoxyalkylene having 1 to 10 carbon atoms). Note that from the viewpoint of availability, $R^3$ is preferably an alkyl group having a carbon number of 4 or less.

In the composition for dip forming, the amount of the polycarbodiimide may be more than 0.2% by weight and 4.0% by weight or less relative to the solid fraction in the composition for dip forming. When the amount of the polycarbodiimide is more than 0.2% by weight, it is possible to provide high fatigue durability exceeding that in sulfur crosslinked gloves. When the amount of the polycarbodiimide is 4.0% by weight or less, profitability is good. The amount of the polycarbodiimide may be 0.3% by weight or more. The amount of the polycarbodiimide may be 2.5% by weight or less, or 2.0% by weight or less.

The average particle size of the micelle of the polycarbodiimide is preferably 5 to 30 nm.

The average particle size of the micelle of the polycarbodiimide is an average value of the particle size of each micelle formed by the polycarbodiimide, which is measured using a dynamic light scattering method using the following conditions.

Measuring device: Zetasizer Nano ZS (manufactured by Malvern Panalytical Ltd.)
Light source: He-Ne (40 mW) 633 nm
Measurement temperature: 25 °C
Viscosity of dispersion medium: 0.887 cP (water value used)
Refractive index of dispersion medium: 1.33 (water value used)
Sample preparation: 100 times dilution using ion exchanged water

The degree of polymerization of the polycarbodiimide may be 5 or more, and the average particle size of the micelle may be 30 nm or less. In this case, it is expected that a cured film having high fatigue durability can be manufactured even when a certain amount of time has passed since the preparation of the composition for dip forming.

(Polyepoxy crosslinking agent)

The polyepoxy crosslinking agent contains an epoxy compound having an epoxy group. The polyepoxy compound has two or more epoxy groups per molecule. The polyepoxy compound may have three or more epoxy groups per molecule. When the epoxy compound has three or more epoxy groups, crosslinking between elastomer molecules increases, thereby improving fatigue durability. **In** addition, even when one of the epoxy groups is deactivated, crosslinking can be performed by remaining epoxy groups, and thus the elastomer can be crosslinked efficiently. Thus, the amount added of the polyepoxy compound can be reduced. The upper limit of the number of epoxy groups of the polyepoxy compound is not particularly limited, and the number of epoxy groups may be 8 or less. The epoxy compound may or may not have an aromatic ring.

From the viewpoint of fatigue durability, the average number of epoxy groups of the polyepoxy crosslinking agent is preferably greater than 2.0, more preferably 2.3 or more, and even more preferably 2.5 or more. For the average number of epoxy groups, each epoxy compound contained in the epoxy crosslinking agent is identified using GPC (gel permeation chromatography). The average number of epoxy groups is obtained by obtaining the number of epoxy groups for each polyepoxy compound by multiplying the number of epoxy groups in one molecule of each polyepoxy compound by the number of moles of that epoxy compound, and then adding the values calculated for all the polyepoxy compounds and dividing the sum thereof by the total number of moles of all the polyepoxy compounds contained in the polyepoxy crosslinking agent.

The polyepoxy compound may contain at least one selected from the group consisting of polyglycidyl ether, polyglycidylamine, polyglycidyl ester, epoxidized polybutadiene, and epoxidized soybean oil.

The polyglycidyl ether may be at least one selected from the group consisting of diglycidyl ether, triglycidyl ether, tetraglycidyl ether, pentaglycidyl ether, hexaglycidyl ether, heptaglycidyl ether, and octaglycidyl ether. The triglycidyl ether may contain at least one selected from the group consisting of glycerol triglycidyl ether, trimethylolpropane triglycidyl ether, sorbitol triglycidyl ether, pentaerythritol triglycidyl ether, and diglycerol triglycidyl ether. The tetraglycidyl ether may contain

at least one selected from the group consisting of sorbitol tetraglycidyl ether and pentaerythritol tetraglycidyl ether. Among these, the polyepoxy compound preferably contains at least one selected from the group consisting of glycerol triglycidyl ether, trimethylolpropane triglycidyl ether, pentaerythritol triglycidyl ether, diglycerol triglycidyl ether, and pentaerythritol tetraglycidyl ether.

From the viewpoint of ensuring fatigue durability by introducing a crosslinking structure sufficiently in the elastomer, the amount of the polyepoxy crosslinking agent added may be, relative to 100 parts by weight of the elastomer, 0.1 parts by weight or more, 0.4 parts by weight or more, or 0.5 parts by weight or more, depending on the number of epoxy groups in one molecule of the epoxy compound and purity. From the viewpoint of improving the properties of the elastomer, the amount of the polyepoxy crosslinking agent added to the composition for dip forming may be, relative to 100 parts by weight of the elastomer, 5 parts by weight or less, 1.0 parts by weight or less, or 0.7 parts by weight or less.

From the viewpoint of ensuring fatigue durability by introducing a crosslinking structure sufficiently in the elastomer, the amount of the polyepoxy compound added may be, relative to 100 parts by weight of the elastomer, 0.05 parts by weight or more, 0.2 parts by weight or more, or 0.25 parts by weight or more, depending on the number of epoxy groups in one molecule of the polyepoxy compound and purity. From the viewpoint of improving the properties of the elastomer, the upper limit of the amount of the polyepoxy crosslinking agent added to the composition for dip forming may be, relative to 100 parts by weight of the elastomer, 2.5 parts by weight or less, 0.5 parts by weight or less, or 0.35 parts by weight or less.

The water solubility ratio of the polyepoxy crosslinking agent may be 10% to 70%. When the water solubility ratio is 10% or more, the solubility in water and XNBR will be high and the productivity will be good. A composition for dip forming can be obtained having a pot life excellent in terms of mass production. When the water solubility ratio is 70% or less, a composition for dip forming can be obtained having a pot life excellent in terms of mass production.

Method for measuring water solubility ratio

1. An amount of 25.0 g of a polyepoxy crosslinking agent is weighted accurately in a beaker, and 225 g of water (25 °C) is added.
2. The obtained mixture is stirred and mixed vigorously at room temperature (23 °C ± 2 °C) for 15 minutes, and left standing for 1 hour.
3. The volume (mL) of oily matter settled at the bottom of the beaker is measured.
4. The water solubility ratio is calculated using the following equation.

Water solubility ratio (%) = (25.0 (g) - (volume of oily matter (mL) × density of polyepoxy crosslinking agent (g/mL))/ 25.0 × 100

An MIBK (methyl isobutyl ketone)/water distribution ratio of the polyepoxy crosslinking agent may be 27% or more. By using the polyepoxy crosslinking agent having a MIBK/water distribution ratio of the polyepoxy crosslinking agent of 27% or more, the polyepoxy crosslinking agent is likely to enter a lipophilic region in XNBR particles, and the polyepoxy crosslinking agent is prevented from being deactivated. Thus, a composition for dip forming can be obtained having a potting life of more than three days. The MIBK/water distribution ratio is preferably 30% or more, more preferably 50% or more, and even more preferably 70% or more. Meanwhile, in the case of a polyepoxy crosslinking agent having a MIBK/water distribution ratio of 27% or more and less than 30%, it is also preferable that the polyepoxy crosslinking agent be 1.0 parts by weight or more relative to 100 parts by weight of the elastomer.

The MIBK/water distribution ratio can be measured as follows.

First, about 5.0 g of water, about 5.0 g of MIBK, and about 0.5 g of a polyepoxy crosslinking agent are weighted accurately and added to a test tube. The weight of MIBK is M (g), and the weight of the polyepoxy crosslinking agent is E (g). The mixture is stirred and mixed at a temperature of 23 °C ± 2 °C for 3 minutes, centrifuged at $1.0 \times 10^3$ G for 10 minutes, and divided into an aqueous layer and an MIBK layer. The weight of the MIBK layer is then measured and set as ML (g).

$$\text{MIBK/water distribution ratio (\%)} = (\text{ML (g)} - \text{M (g)}) / \text{E (g)} \times 100$$

Note that in the method for measuring the MIBK/water distribution ratio in this specification, the measurement was based on the weight of water and that of MIBK, and although experimental values included a negative value (%) due to slight dissolution of water in MIBK, these values were considered to be adopted as standards since the measurement was performed on the same standard.

The composition for dip forming may contain a polyepoxy crosslinking agent and a dispersant. The weight ratio of the polyepoxy crosslinking agent and the dispersant in the composition for dip forming is preferably 1:4 to 1:1.

The dispersant is preferably one or more selected from the group consisting of a monohydric lower alcohol, a glycol, ether, and ester. Examples of the monohydric lower alcohol include methanol and ethanol. Examples of the glycol

include $HO-(CH_2CHR^1-O)_{n1}-H$ ($R^1$ represents a hydrogen or a methyl group, and n1 represents an integer of 1 to 3). Specific examples of the glycol include ethylene glycol, propylene glycol, diethylene glycol, dipropylene glycol, and tripropylene glycol. Examples of ether includes $R^2O-(CH_2CHR^1-O)_{n2}-R^3$ ($R^1$ represents a hydrogen or a methyl group, $R^2$ represents an aliphatic hydrocarbon group having 1 to 5 carbon atoms, $R^3$ represents hydrogen or an aliphatic hydrocarbon group having 1 to 3 carbon atoms, and n2 represents an integer of 0 to 3). Specific examples of the ether include glycol ether such as diethylene glycol monomethyl ether, diethylene glycol monoisopropyl ether, diethylene glycol monobutyl ether, diethylene glycol monoisobutyl ether, triethylene glycol monomethyl ether, triethylene glycol monobutyl ether, tripropylene glycol monomethyl ether, and triethylene glycol dimethyl ether. As the ester, $R^2O-(CH_2CHR^1-O)_{n3}-(C=O)-CH_3$ ($R^1$ represents hydrogen or a methyl group, $R^2$ represents an aliphatic hydrocarbon group having 1 to 5 carbon atoms, and n3 represents an integer of 0 to 3). Examples of the ester include diethylene glycol monoethyl ether acetate and diethylene glycol monobutyl ether acetate. These may be used alone or in combination with two or more. The dispersant may be used without being mixed with water in advance. The dispersant is preferably a monohydric lower alcohol. The dispersant used is preferably methanol, ethanol, or diethylene glycol. From the viewpoint of volatility and flammability, the dispersant used is preferably diethylene glycol. Diethylene glycol is presumed to be preferable since diethylene glycol has a highly hydrophilic glycol group and an ether structure, contains a lipophilic hydrocarbon structure, and is easily soluble in both water and elastomer.

(Metal crosslinking agent)

The metal crosslinking agent forms crosslinking, due to ionic bonds, with a carboxy group of XNBR. The metal crosslinking agent may contain a polivalent metal compound having a divalent or higher metal. Examples of the divalent or higher metal include magnesium, aluminum, calcium, titanium, chromium, iron, cobalt, zinc, zirconium, tin, and lead. The metal crosslinking agent may contain at least one of a zinc compound or an aluminum compound. By using such a metal crosslinking agent, it is expected that the tensile strength of gloves will be improved, the swelling in artificial sweat will be suppressed, and the organic solvent impermeability will be improved.

Examples of the zinc compound include zinc oxide and zinc hydroxide. Among these, zinc oxide is often used. The amount of zinc oxide added may be 0.2 to 4.0 parts by weight relative to the total amount of the solid fraction of the composition for dip forming. Thus, the tensile strength of gloves can be improved. The amount of zinc oxide added may be 0.8 parts by weight or more. The amount of zinc oxide added may be 1.5 parts by weight or less.

The aluminum compound may contain aluminum hydroxyl acid or an aluminate. Examples of the aluminum hydroxyl acid include aluminum citrate and aluminum lactate. Examples of the aluminate include sodium aluminate and potassium aluminate. When an aluminate is used, the composition for dip forming may contain a stabilizer. As the stabilizer, an alcohol compound, a hydroxycarboxylic acid, and a hydroxycarboxylic acid salt can be used. Examples of the alcohol compound include sugar alcohols such as sorbitol, saccharides such as glucose, polyhydric alcohols such as glycerin and ethylene glycol. Examples of the hydroxycarboxylic acid include glycolic acid, citric acid, malic acid, and lactic acid. Examples of the hydroxycarboxylic acid salt include metal salts of the above hydroxycarboxylic acid.

In the composition for dip forming, the aluminum compound may exist in the form of aluminum complex ions such as tetrahydroxyaluminate ions ($[Al(OH)_4]^-$). The aluminum complex ions are changed to $Al(OH)_3$, for example, in a leaching step S5 described below, and become $Al^{3+}$ in a curing step S8 and bond with carboxy groups, thereby forming crosslinking. The amount of the aluminum compound added is preferably 0.2 to 1.5 parts by weight in terms of aluminum oxide ($Al_2O_3$) relative to the total amount of the solid fraction of the composition for dip forming.

The metal crosslinking agent may contain a zinc compound and an aluminum compound. Thus, the hardening of gloves are relieved, and gloves having excellent elasticity can be obtained. The total amount of the zinc compound and the aluminum compound added is preferably 0.7 to 2.3 parts by weight relative to the total amount of the solid fraction of the composition for dip forming. The ratio of the zinc oxide and the aluminum compound (in terms of aluminum oxide ($Al_2O_3$)) is preferably $ZnO:Al_2O_3$ = 1:0.6 to 1:1.2.

<Antioxidant>

The composition for dip forming contains an antioxidant containing at least one compound having a phenol structure and a sulfur atom. The at least one compound may contain at least one compound having a phenol structure and at least one selected from the group consisting of a thioether structure, a polysulfide structure, and a thiol structure. The at least one compound may contain at least one compound having a phenol structure, and a thioether structure or polysulfide structure. The at least one compound may contain a compound having both a phenol structure and a sulfur atom in the same molecule, or may contain two or more compounds of a compound having a phenol structure and a compound having a sulfur atom. The at least one compound may contain a compound having both a phenol structure and a sulfur atom in the same molecule, and at least one of a compound having a phenol structure or a compound having a sulfur atom. The at least one compound may have only one phenol structure or may have multiple phenol structures. The at least one compound

may have only one sulfur atom or may have multiple sulfur atoms. The amount of the at least one compound is 0.05 to 4 parts by weight relative to 100 parts by weight of the elastomer. By setting the amount of the above compound to 0.05 parts by weight or more, at least one of the deterioration of mechanical properties over time or yellowing over time can be suppressed. By setting the amount of the above compound to 4 parts by weight or less, gloves having a flexible texture can be made. The amount of the at least one compound may be 0.1 to 2 parts by weight relative to 100 parts by weight of the elastomer.

A compound having both a phenol structure and a sulfur atom in the same molecule, and a compound having a phenol structure are each a compound containing a phenolic compound. The compound having a phenol structure may contain at least one phenolic compound selected from the group consisting of a hindered phenolic compound, a semi-hindered phenolic compound, and a less-hindered phenolic compound. The hindered phenolic compound is a phenolic compound having bulky substituents at two ortho positions relative to a hydroxy group of the phenol structure. The semi-hindered phenolic compound is a phenolic compound having a bulky substituent at one ortho position and a less bulky substituent at the other ortho position, relative to a hydroxy group of the phenol structure. The less-hindered phenolic compound is a less-hindered phenolic compound having a bulky substituent at one ortho position and hydrogen at the other ortho position, relative to a hydroxy group of the phenol structure. As the bulky substituent, a substituent having a tertiary carbon can be mentioned and is represented by a t-butyl group. As the less bulky substituent, a substituent having a primary carbon can be mentioned and is represented by a methyl group.

The compound having both a phenol structure and a sulfur atom in the same molecule may be a compound having, in the same molecule, a phenol structure and at least one selected from the group consisting of a thioether structure, a polysulfide structure, and a thiol structure. The above compound may have only one phenol structure or multiple phenol structures in the same molecule. The compound having both a phenol structure and a sulfur atom in the same molecule may contain at least one selected from the group consisting of 2-methyl-4,6-bis[(octylthio)methyl]phenol (CAS No.: 110553-27-0), 2,4-bis(n-octylthio)-6-(4-hydroxy-3,5-di-t-butylanilino)-1,3,5-triazine (CAS No.: 991-84-4), 2,2'-thiodiethylbis[3-(3,5-di-tert-butyl-4-hydroxyphenyl)propionate] (CAS No.: 41484-35-9), and 4,4'-thiobis(3-methyl-6-t-butyl-phenol) (CAS No.: 96-69-5), for example.

The amount of the compound having both a phenol structure and a sulfur atom in the same molecule may be 0.05 to 4 parts by weight relative to 100 parts by weight of the elastomer. By setting the amount of the above compound to 0.05 parts by weight or more, at least one of the deterioration of mechanical properties over time or yellowing over time can be suppressed. By setting the amount of the above compound to 4 parts by weight or less, gloves having a flexible texture can be made. The amount of the compound having both a phenol structure and a sulfur atom in the same molecule may be 0.1 to 2 parts by weight relative to 100 parts by weight of the elastomer.

The compound having a phenol structure may include at least one selected from the group consisting of: a butylation reaction product of p-cresol with dicyclopentadiene and isobutylene (CAS No. 68610-51-5), tris-(3,5-di-t-butyl-4-hydroxybenzyl)isocyanurate (CAS No. 27676-62-6), 4,4'-butylidenebis(6-t-butyl-3-methylphenol) (CAS No. 85-60-9), n-octadecyl-3-(3,5-di-t-butyl-4-hydroxyphenyl)propionate (CAS No. 2082-79-3), pentaerythritol tetrakis [3-(3,5-di-t-butyl-4-hydroxyphenyl)propionate] (CAS No. 6683-19-8), 2,6-di-t-butyl-4-methylphenol (CAS No. 128-37-0), 2,6-di-t-butylphenol (CAS No. 128-39-2), 2,6-di-t-butyl-4-hydroxymethylphenol (CAS No. 88-26-6), 2,4-dimethyl-6-t-butylphenol (CAS No. 1879-09-0), butyl hydroxyanisole (CAS No. 25013-16-5), 2,2'-methylenebis-(4-methyl-6-t-butylphenol) (CAS No. 119-47-1), 2,2'-methylenebis(4-ethyl-6 -t-butylphenol) (CAS No. 88-24-4), 1,6-hexanediol-bis[3-(3,5-di-t-butyl-4-hydroxyphenyl) propionate] (CAS No. 35074-77-2), 1,3,5-trimethyl-2,4,6-tris-(3,5-di-t-butyl-4-hydroxybenzyl)benzene (CAS No.: 1709-70-2), triethyleneglycol-bis[3-(3-t-butyl-4-hydroxy-5-methylphenyl)propionate] (CAS No.: 36443-68-2), 3-t-butyl-4-hydroxyanisole (CAS No.: 121-00-6), 1,1,3-tris(2-methyl-4-hydroxy-5-tert-butylphenyl)butane (CAS No.: 1843-03-4), and 3,9-bis[2-[3-(3-tert-butyl-4-hydroxy-5-methylphenyl)propionyloxy]-1,1-dimethylethyl]-2,4,8,10-tetraoxaspiro[5,5]undecane (CAS No.: 90498-90-1). The compound having a phenol structure may not contain a compound having both a phenol structure and a sulfur atom in the same molecule. Note that the compound having a phenol structure may have only one phenol structure or multiple phenol structures in the same molecule.

The amount of the compound having a phenol structure may be 0.01 to 2 parts by weight relative to 100 parts by weight of the elastomer. By setting the amount of the compound having a phenol structure to 0.01 parts by weight or more, at least one of the deterioration of mechanical properties over time or yellowing over time can be suppressed. By setting the amount of the compound having a phenol structure to 2 parts by weight or less, gloves having a flexible texture can be made.

The compound having a sulfur atom may be a compound having at least one selected from the group consisting of a thioether structure, a polysulfide structure, and a thiol structure. The compound having a sulfur atom may be a compound having a thioether structure or a polysulfide structure. The compound having a sulfur atom may contain at least one selected from the group consisting of dilauryl 3,3'-thiodipropionate (CAS No.: 123-28-4), dimyristyl 3,3'-thiodipropionate (CAS No.: 16545-54-3), 3-laurylthiopropionic acid (CAS No.: 1462-52-8), distearyl 3,3'-thiodipropionate (CAS No.: 693-36-7), 3,3'-thiodipropionic acid (CAS No.: 111-17-1), ditridecyl-3,3'-thiodipropionate (CAS No.: 10595-72-9), tetrakis[methylene-3-(dodecylthio)propionate]methane (CAS No.: 29598-76-3), and thiobis(2-tert-butyl-5-methyl-4,1-phenylene)bis(3-(dodecylthio)propionate) (CAS No.: 66534-05-2). The compound having a sulfur atom may not contain a compound having both a phenol structure and a sulfur atom in the same molecule. Note that the compound having a sulfur atom may have only one sulfur atom or multiple sulfur atoms in the same molecule.

The amount of the compound having a sulfur atom may be 0.01 to 2 parts by weight relative to 100 parts by weight of the elastomer. By setting the amount of the compound having a sulfur atom to 0.01 parts by weight or more, at least one of the deterioration of mechanical properties over time or yellowing over time can be suppressed. Moreover, by setting the amount of the compound having a sulfur atom to 2 parts by weight or less, gloves having a flexible texture can be made.

The amount of the compound having a sulfur atom may be, in terms of the weight ratio, larger than the amount of the compound having a phenol structure. The amount of the compound having a sulfur atom may be, in terms of the weight ratio, less than the amount of the compound having a phenol structure. The amount of the compound having a sulfur atom may be, in terms of the weight ratio, the same as the amount of the compound having a phenol structure. Note that the amount of the compound having a sulfur atom is, in terms of the weight ratio, preferably 2 times or more and 4 times or less the amount of the compound having a phenol structure.

Note that it is preferable that the at least one compound contain a compound having both a phenol structure and a sulfur atom in the same molecule. The compound having a phenol structure generally reacts with a radical to produce a phenoxy radical. The phenoxy radical is stabilized by having a bulky substituent, represented by a t-butyl group, at the adjacent ortho position, thereby preventing a radical chain reaction that causes rubber to deteriorate. However, further reaction of a phenoxy radical produces a quinone compound. The production of a quinone compound may cause the composition to become yellow to brown in color even though the compound having a phenol structure itself is usually colorless. In a blend in which two compounds of the compound having a phenol structure and the compound having a sulfur atom are added, the compound having a phenol structure itself becomes discolored when oxidative deterioration proceeds. In contrast, in the case of a compound having both a phenol structure and a sulfur atom, a peroxide compound is decomposed by the sulfur atom, thereby preventing further reaction of a phenoxy radical. Since it is possible to prevent the modification of the compound due to suppression of the oxidative deterioration, it is thought that the effect of suppressing yellowing can be obtained even more.

<Other optional components>

In addition to the elastomer, the crosslinking agent, the antioxidant, and water, the composition for dip forming may contain other optional components such as a pH adjuster, a moisturizer, a dispersant, a pigment, and a chelating agent.

Potassium hydroxide is usually used as the pH adjuster. The amount of the potassium hydroxide used is usually 0.1 to 2.0 parts by weight relative to 100 parts by weight of the composition for dip forming. As the moisturizer, polyols can be mentioned, and among them, it is preferable to use a divalent or trivalent compound. The amount of the moisturizer used may be about 1.0 to 5.0 parts by weight relative to 100 parts by weight of the elastomer. As the dispersant, an anionic surfactant is preferably used, examples thereof include a carboxylate, a sulfonate, a phosphate, a polyphosphate ester, a polymerized alkyl aryl sulfonate, a polymerized sulfonated naphthalene, and a polymerized naphthalene/formaldehyde condensation polymer, and a sulfonate is preferably used. The dispersant is preferably about 0.5 to 2.0 parts by weight relative to 100 parts by weight of the elastomer in the composition for dip forming. Titanium dioxide or the like is used as the pigment. Sodium ethylenediaminetetraacetic acid or the like can be used as the chelating agent.

As described above, the sulfur-free crosslinked composition for dip forming according to the present embodiment contains a carboxylated diene rubber elastomer, a crosslinking agent containing at least one of an organic crosslinking agent or a metal crosslinking agent with a valence of two or more, an antioxidant, and water. The carboxylated diene rubber elastomer may contain, in a polymer main chain, a structural unit derived from (meth)acrylonitrile, a structural unit derived from an unsaturated carboxylic acid, and a structural unit derived from butadiene. The antioxidant contains at least one compound having a phenol structure and a sulfur atom. The amount of the at least one compound is 0.05 to 4 parts by weight relative to 100 parts by weight of the elastomer. The composition for dip forming according to the present embodiment can form gloves capable of suppressing at least one of the deterioration of mechanical properties over time or yellowing over time.

[Method for manufacturing composition for dip forming]

Next, a method for manufacturing a sulfur-free crosslinked composition for dip forming according to the present embodiment will be described. The method for manufacturing a composition for dip forming includes a step of mixing the above-described carboxylated diene rubber elastomer, crosslinking agent, and antioxidant. The carboxylated diene rubber elastomer may contain, in a polymer main chain, a structural unit derived from (meth)acrylonitrile, a structural unit derived from an unsaturated carboxylic acid, and a structural unit derived from butadiene. The crosslinking agent contains

at least one of an organic crosslinking agent or a metal crosslinking agent with a valence of two or more. The antioxidant contains at least one compound having a phenol structure and a sulfur atom. The amount of the at least one compound is 0.05 to 4 parts by weight relative to 100 parts by weight of the elastomer. In the method for manufacturing a composition for dip forming according to the present embodiment, the above-described composition for dip forming can be manufactured. Note that the details of materials to be used and the amounts added are the same as those described above, and thus the description thereof will be omitted.

In the method for manufacturing a composition for dip forming according to the present embodiment, at least one compound having a phenol structure and a sulfur atom may be added, to the elastomer, in a dispersion state in which the compound is dispersed in an aqueous solvent. That is, the antioxidant may be a dispersion. It is thus possible to improve the dispersibility of the at least one compound having a phenol structure and a sulfur atom in the composition for dip forming. The amount of the at least one compound having a phenol structure and a sulfur atom relative to the dispersion may be 25% to 75% by weight or may be 40% to 60% by weight.

[Gloves]

Next, a glove according to the present embodiment will be described. The glove according to the present embodiment includes a sulfur-free crosslinked elastomer, which is carboxylated diene rubber, a crosslinking agent, and an antioxidant. The carboxylated diene rubber elastomer may contain, in a polymer main chain, a structural unit derived from (meth)acrylonitrile, a structural unit derived from an unsaturated carboxylic acid, and a structural unit derived from butadiene. The crosslinking agent contains at least one of an organic crosslinking agent or a metal crosslinking agent with a valence of two or more. The antioxidant is dispersed in the sulfur-free crosslinked elastomer. The antioxidant contains at least one compound having a phenol structure and a sulfur atom. The amount of the at least one compound is 0.05 to 4 parts by weight relative to 100 parts by weight of the sulfur-free crosslinked elastomer. The glove according to the present embodiment can suppress at least one of the deterioration of mechanical properties over time or yellowing over time.

The glove is made from a cured film formed by curing the above composition for dip forming. The composition of the carboxylated diene rubber elastomer (e.g., XNBR) contained in the cured film may be the same composition as that added to the composition for dip forming.

The elastomer in the composition for dip forming is crosslinked by a crosslinking agent made from a substantially sulfur-free crosslinking agent, resulting in a sulfur-free crosslinked elastomer. Specifically, a carboxy group of the carboxylated diene rubber elastomer is crosslinked, resulting in a sulfur-free crosslinked elastomer. When a polycarbodiimide is used as the crosslinking agent, the sulfur-free crosslinked elastomer has a polycarbodiimide crosslinking structure. When a zinc compound is used as the crosslinking agent, the sulfur-free crosslinked elastomer has a zinc crosslinking structure. When an aluminum compound is used as the crosslinking agent, the sulfur-free crosslinked elastomer has an aluminum crosslinking structure.

The thickness of gloves can be adjusted according to the purpose, for example, in the range of 50 to 100 μm, and can be used as accelerator-free disposable gloves for medical, food, and clean room applications.

[Method for manufacturing gloves]

Next, a method for manufacturing a glove according to the present embodiment will be described. The method for manufacturing a glove includes a step of dip-forming a glove using a composition for dip forming. In the method for manufacturing a glove according to the present embodiment, the above-described glove can be manufactured.

The step of dip-forming may include a coagulating solution adhesion step S1, a stirring step S2, a dipping step S3, a gelling step S4, a leaching step S5, a beading step S6, a pre-curing step S7, a curing step S8, and an on-line chlorination step S9. When manufacturing clean room gloves, an offline chlorination step S10 may be further included after gloves are removed from a hand mold.

(Coagulating solution adhesion step S1)

In the coagulating solution adhesion step S1, a mold or former (glove mold) is usually immersed in a coagulating solution. The mold or former to which the coagulating solution adheres may be dried at 50 to 70 °C, and the entirety or part of the surface may be dried. Here, the time for causing the coagulating solution to adhere to the surface of the mold or former may be set appropriately and may be about 10 to 20 seconds. As the coagulating solution, an aqueous solution is used which contains, preferably 5% to 40% by weight, and more preferably 8% to 35% by weight, of a coagulant such as calcium nitrate or calcium chloride, or an aggregating agent such as an inorganic salt having an effect of precipitating the elastomer, for example. The coagulating solution preferably contains, as a release agent, about 0.5% to 2% by weight, for example, 1% by weight, of potassium stearate, calcium stearate, a mineral oil, an ester-based oil, or the like. The coagulating solution serves to aggregate the elastomer in the dipping step S3 described below, and calcium ions contained

in the coagulating solution form calcium crosslinking in the cured film.

(Stirring step S2)

The stirring step S2 is a step of stirring the composition for dip forming. In the case of sulfur-free crosslinked gloves, the stirring step S2 is a step of stirring the composition for dip forming, dispersing and mixing it as uniformly as possible, and defoaming it, which is also called ripening, following the ripening step of sulfur vulcanization. In actual mass production, the stirring step is performed for one to two days. The working life (pot life) of the crosslinking agent in a dipping tank during the stirring step S2 and the dipping step S3 is about three to five days in practical use.

(Dipping step S3)

The dipping step S3 is a step of causing the composition for dip forming to adhere to a mold or former to which a coagulating solution is adhered. In the dipping step S3, the mold or former after drying in the coagulating solution adhesion step S1 may be dipped in the composition for dip forming under the conditions of a dip liquid temperature of 25 to 40 °C and a time period of 10 to 30 seconds, for example. In the dipping step S3, the elastomer in the composition for dip forming may be aggregated on the surface of the mold or former by means of calcium ions contained in the coagulating solution so as to form a film.

(Gelling step S4)

The gelling step S4 is a step of gelling the film pulled up from the composition for dip forming, and performing film formation to a certain level so that the elastomer does not elute in the leaching step S5. The film at this point is called a cured film precursor. Usually, gelling is a step of heating and drying at 100 to 120 °C for about 30 seconds to 4 minutes in the case of sulfur-vulcanized XNBR gloves, but in the case of sulfur-free-crosslinked gloves, optimum conditions are set for each crosslinking agent. For example, in the case of polycarbodiimide-crosslinked gloves, when a volatile base is used for the pH adjuster, the room temperature is good, and even when a moisturizer is added, the crosslinking agent is deactivated when the temperature is raised to the above temperature. When an alkali metal hydroxide is used for the pH adjuster, heating to the above temperature is possible, but in the both cases, the cured film precursor is gelled so as to prevent it from drying.

(Leaching step S5)

The leaching step S5 is a step of washing the cured film precursor adhering to the glove mold with water to remove excess water-soluble substances after the above gelling step S4. Among sulfur-free crosslinked gloves, especially when a volatile base is used for the pH adjuster in polycarbodiimide crosslinked gloves, the temperature and time for leaching are adjusted in order to reduce to a certain amount or less, in this step, the amount of calcium, potassium, and the like that will prevent the crosslinking of the polycarbodiimide in the curing step S8.

(Beading step S6)

The beading step S6 is a step of performing sleeve winding processing on the sleeve ends of gloves after the leaching step S5 is completed.

(Pre-curing step S7)

The pre-curing step S7 is a step of drying the mold or former in a furnace at 60 to 90 °C, more preferably at 65 to 80 °C, for, for example, 30 seconds to 10 minutes, after the beading step S6 and before the curing step S8. The presence of the pre-curing S7 prevents partial expansion of gloves that may occur due to a sudden decrease in moisture during the curing step S8. This step and the next step may be collectively referred to as a curing step.

(Curing step S8)

The curing step S8 is a step of heating and drying the cured film precursor, crosslinking the elastomer with a crosslinking agent, and obtaining a glove formed with the cured film. Generally, the glove is heated and dried at a temperature of 100 to 140 °C for 15 to 30 minutes.

(Online chlorination step S9)

The online chlorination step S9 is a step of chlorinating the cured film on the hand mold made in the curing step S8 in its original state, and drying the film after neutralization washing. This step is performed in the following procedure.

- The surface of the cured film is washed with water to remove chemicals and the like, and dried. The conditions for washing with water are usually set to 30 to 80 °C and 60 to 80 seconds.
- The cured film is immersed in an aqueous solution having a chlorine concentration of 600 to 1,200 ppm in a treating vessel for 5 to 10 seconds so as to remove stickiness (tackiness) from the surface of the cured film. At this time, the thickness of the cured film surface decreases slightly.
- After the chlorination, the cured film is reduced and neutralized using a reducing agent such as sodium thiosulfate, or an alkaline agent such as KOH or sodium carbonate. Note that chlorine remains in rubber gloves even after the above treatment.
- The cured film is washed with water and dried.

After the above online chlorination step S9, a glove is obtained by removing the cured film from the hand mold while turning it over. At this time, the chlorinated side of the glove becomes the inside when the glove is worn, and the inside of the glove can be made a non-sticky surface, and thus a glove can be obtained in which the part that touches a hand is smooth and which achieves easy slipping of the hand.
Gloves are usually manufactured through the above online steps of S2 to S9.

(Offline chlorination step S10)

The offline chlorination step S10 is an offline step of making usual gloves into clean-room gloves. The glove surface is smoothed and impurity metals are removed therefrom in order to reduce dust generated from gloves and to prevent metal elution or transfer from the glove surface to products in the clean-room. The offline chlorination step S10 is performed in the following procedure.
- A step of removing the glove from the former inside out and chlorinating the outside of the glove

The glove is put in chlorination equipment, chlorine water is added to immerse the glove. The chlorination equipment has a sideways cylindrical cage, and the treatment may be performed while stirring is performed by placing the glove in the cage and rotating the cage. Examples of chlorination conditions are as follows.
The glove is pre-washed, immersed in chlorine water having a chlorine concentration of 200 to 400 ppm for 5 to 25 minutes, and then neutralized. The glove is rinsed several more times, dried, and then cooled.

- A step of washing the chlorinated glove with pure water

Examples of pure water washing conditions are as follows.
The glove is washed twice for 10 to 20 minutes in ion exchanged water with a resistivity of 18 MΩ·cm or more. The washing procedure includes washing, drainage, centrifugal dehydration, and drying. Consequently, impurity metals contained in the glove surface turn into chlorides, thereby increasing solubility, and are removed by pure water washing. The chlorine concentration is set appropriately according to the application of clean rooms. Note that chlorine remains in rubber gloves even after the above treatment.
In the above-described manufacturing method, the case where a glove mold is dipped into the composition for dip forming only once has been described, but it is also possible to manufacture gloves by performing dipping multiple times (two or three times). Such a method is effective in suppressing the occurrence of pinholes, which is a concern when the thickness of gloves is reduced to about 50 μm. It is also an effective means for making thick gloves. When dipping is performed multiple times, the dipping step S3 and the gelling step S4 may be repeatedly performed.

EXAMPLES

Hereinafter, the present embodiment will be described in more detail with examples and comparative examples, but the present embodiment is not limited to these examples.
Specimens of examples 1 to 4 and comparative examples 1 to 5 were manufactured as follows.

(Manufacturing of composition for dip forming)

An amount of 300 g of latex containing XNBR (BST8503S of Bangkok Synthetics Co., Ltd.: solid fraction 45.1%) was put in a 1L beaker (manufactured by AS ONE CORPORATION, body diameter 105 mm × height 150 mm). The latex was diluted with 100 g of water, and stirring was started. The pH of the latex was preliminarily adjusted to 9.5 using a 5% by weight aqueous solution of potassium hydroxide. Subsequently, a polyepoxy crosslinking agent ("Denacol EX-321" (trade name) manufactured by Nagase ChemteX Corporation: solid fraction (amount of epoxy compound) 50% by weight, 141 epoxy equivalent (g/eq.), average number of epoxy groups 2.7, MIBK/water distribution ratio 87%), zinc oxide as a metal crosslinking agent ("CZnO-50" (trade name) manufactured by Farben Technique (M) Sdn Bhd.: solid fraction (amount of zinc oxide) 50% by weight), titanium oxide as a white pigment ("PW-601" (trade name) manufactured by Farben Technique (M) Sdn Bhd.: solid fraction (amount of titanium oxide) 71.4% by weight), and an antioxidant were added as shown in Table 1, water was added so that the solid fraction concentration was 25%, and the composition for dip forming was manufactured by performing stirring and mixing all night. The composition for dip forming was kept stirred in a beaker until it was used. Note that Table 1 shows the blend amounts in terms of the solid fraction equivalent.

The following antioxidants were used.

Antioxidant (Phe1)
Dispersion in which Phel is dispersed in an aqueous solvent
Solid fraction (amount of Phe1) 50.3% by weight
Phe1: Wingstay (registered trademark) L (butylated reaction product of p-cresol with dicyclopentadiene and isobutylene: CAS No. 68610-51-5) (a compound having a phenol structure) (see chemical formula (1) below)

[Chemical formula 1]

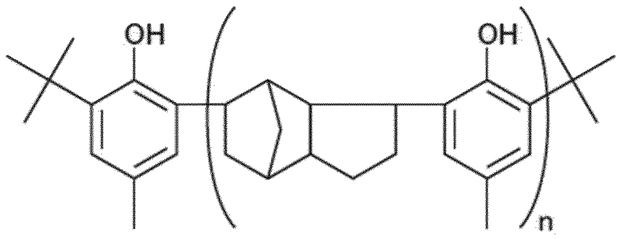

(1)

Antioxidant (Phe1 + Pho)
Dispersion in which Phe1 and Pho are dispersed in an aqueous solvent
Solid fraction (total amount of Phe1 and Pho) 48.4% by weight
Phe1: see above
Pho: tris(2,4-di-t-butylphenyl)phosphite: CAS No. 31570-04-4, "Irgafos 168" (trade name) manufactured by BASF Japan Ltd. (see chemical formula (2) below)

The amount of Pho relative to the total amount of Phe1 and Pho is 75% by weight.

[Chemical formula 2]

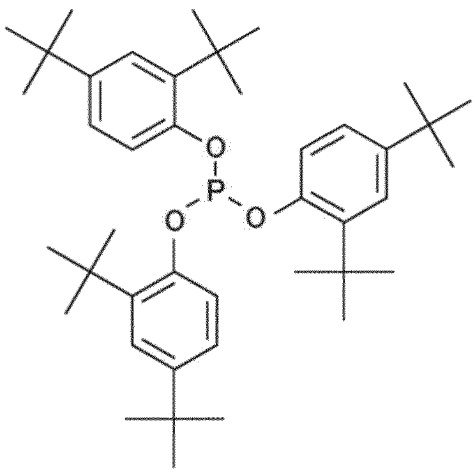

(2)

Antioxidant (Phe1+Sul)1
Dispersion in which Phe1 and Sul are dispersed in an aqueous solvent
Solid fraction (total amount of Phe1 and Sul) 52.8% by weight
Phe1: see above
Sul: ditridecyl-3,3'-thiodipropionate: CAS No. 10595-72-9 (a compound having a sulfur atom) "ADK STAB AO-503" (trade name) manufactured by Adeka Corporation (see chemical formula (3) below)

The amount of Sul relative to the total amount of Phe1 and Sul is 75% by weight.

[Chemical formula 3]

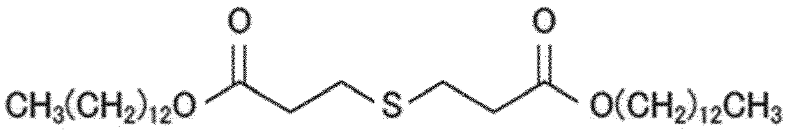

(3)

Antioxidant (Phe/Sul)
Dispersion in which Phe/Sul is dispersed in an aqueous solvent
Solid fraction: (amount of Phe/Sul) 53.2% by weight
Phe/Sul: 2-methyl-4,6-bis[(octylthio)methyl]phenol: CAS No. 110553-27-0 (a compound having both a phenol structure and a sulfur atom in the same molecule) "Irganox1520L" (trade name) manufactured by BASF Japan Ltd. (see chemical formula (4) below)

[Chemical formula 4]

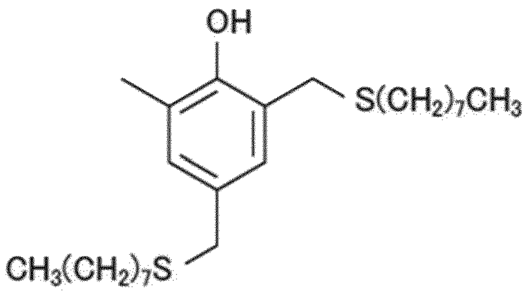

(4)

(Preparation of coagulating solution)

An amount of 19.6 g of a release agent was diluted about 2 times using part of 30 g of water previously weighed. Then, the diluted solution of the release agent was slowly added to a solution in which 0.56 g of a surfactant was dissolved in 42.0 g of water. "Teric320" (trade name) manufactured by Huntsman Corporation was used as the surfactant. "S-9" (trade name) manufactured by CRESTAGE INDUSTRY SDN BHD. (solid fraction concentration 25.46% by weight) was used as the release agent. The total amount of S-9 remaining in the vessel was added while rinsed with remaining water, and stirring was performed for 3 to 4 hours to prepare an S-9 dispersion.

Next, an aqueous solution of calcium nitrate obtained by dissolving 143.9 g of calcium nitrate tetrahydrate in 153.0 g of water was prepared in a 1L beaker (manufactured by AS ONE CORPORATION, body diameter 105 mm × height 150 mm), and while the aqueous solution of calcium nitrate was stirred, the previously prepared S-9 dispersion was added thereto. The pH of this solution was adjusted to 8.5 to 9.5 using a 5% ammonia water, and water was added so that, ultimately, calcium nitrate had a concentration of 20% as an anhydride and S-9 had a concentration of 1.2% as a solid fraction, and 500 g of a coagulating solution was obtained. The resultant coagulating solution was kept stirred in a 1L beaker until it was used.

(Manufacturing of curable film)

The coagulating solution obtained as described above was warmed to about 50 °C while stirred, was filtered through a 200-mesh nylon filter, and was put in a dipping vessel. Then, a plate made from ceramic (200 × 80 × 3 mm, hereinafter referred to as "ceramic plate") that was washed and then warmed to 70 °C was dipped in the coagulating solution (coagulating solution adhesion step). Specifically, once the tip of the ceramic plate was brought into contact with the surface of the coagulating solution, the ceramic plate was dipped to a position of 18 cm from the tip thereof over a period of 6 seconds, kept dipped for 6 seconds, and then pulled out over a period of 6 seconds. The coagulating solution adhered to the surface of the ceramic plate was quickly shaken off, and the surface of the ceramic plate was dried. After drying, the ceramic plate was warmed up to 70 °C again in preparation for subsequent dipping in the composition for dip forming.

The above composition for dip forming was filtered through a 200-mesh nylon filter at room temperature and put in a dipping vessel, and the ceramic plate at 70 °C to which the coagulating solution was adhered was dipped in the composition for dip forming. Specifically, the ceramic plate was dipped over a period of 6 seconds, held for 6 seconds, and then pulled out over a period of 6 seconds. The composition for dip forming was held in the air until it stopped dripping, and droplets of the composition for dip forming adhering to the tip were lightly shaken off.

The ceramic plate that had been dipped in the composition for dip forming was dried at 23 °C ± 2 °C for 30 seconds (gelling step) and washed with hot water at 50 °C for 5 minutes (leaching step). The ceramic plate was then dried at 70°C for 5 minutes (pre-curing step) and heat-cured at 130°C for 30 minutes (curing step). The obtained cured film (average thickness: 0.08 mm) was carefully peeled off from the ceramic plate and stored in an environment of a temperature of 23 °C ± 2 °C and a humidity of 50% ± 10% until being subjected to physical properties tests.

[Evaluation]

(Color difference measurement)

Specimens of examples 1 to 4 and comparative examples 1 to 5 were placed in an oven set at 100 °C and taken out after 1, 4, 7, and 11 days. The color difference (ΔE) of the surface of each specimen was obtained according to JIS-Z 8730:2009 using a chromatic color-difference meter ("CR-400" (trade name) manufactured by KONICA MINOLTA, INC.). Note that the color difference was calculated based on a color difference of the specimen on day 0 without aging treatment.

[Table 1]

| | | | Example 1 | Example 2 | Example 3 | Example 4 | Comparative example 1 | Comparative example 2 | Comparative example 3 | Comparative example 4 | Comparative example 5 |
|---|---|---|---|---|---|---|---|---|---|---|---|
| Latex | | phr | 100 | 100 | 100 | 100 | 100 | 100 | 100 | 100 | 100 |
| Epoxy crosslinking agent | | phr | 0.5 | 0.5 | 0.5 | 0.5 | 0.5 | 0.5 | 0.5 | 0.5 | 0.5 |
| Zinc oxide ZnO | | phr | 0.8 | 0.8 | 0.8 | 0.8 | 0.8 | 0.8 | 0.8 | 0.8 | 0.8 |
| Titanium oxide TiO2 | | phr | 2.0 | 2.0 | 2.0 | 2.0 | 2.0 | 2.0 | 2.0 | 2.0 | 2.0 |
| Antioxidant (Phe1) | | phr | - | - | - | - | - | 1.0 | 0.2 | - | - |
| Antioxidant (Phe1+Pho) | | phr | - | - | - | - | - | - | - | 1.0 | 0.2 |
| Antioxidant (Phe1+Sul)1 | | phr | 1.0 | 0.2 | | | - | - | - | - | - |
| Antioxidant (Phe/Sul) | | phr | - | - | 1.0 | 0.2 | - | - | - | - | - |
| Color difference (ΔE) | 0 days | - | 0.00 | 0.00 | 0.00 | 0.00 | 0.00 | 0.00 | 0.00 | 0.00 | 0.00 |
| | 1 day | - | 0.47 | 0.77 | 0.30 | 0.62 | 2.41 | 2.80 | 2.56 | 2.26 | 2.16 |
| | 4 days | - | 1.32 | 2.88 | 1.02 | 2.52 | 6.33 | 6.20 | 5.83 | 6.56 | 5.88 |
| | 7 days | - | 3.08 | 6.65 | 2.34 | 5.54 | 11.65 | 12.31 | 12.29 | 14.44 | 11.87 |
| | 11 days | - | 5.82 | 18.60 | 4.12 | 11.23 | 19.37 | 22.51 | 19.57 | 25.06 | 21.06 |

As shown in Table 1 and FIG. 2, it is evident that the specimens of examples 1 to 4 have a smaller color difference before and after aging than the specimens of comparative examples 1 to 5. From these results, it is evident that discoloration due to aging is smaller in specimens using an antioxidant containing at least one compound having a phenol structure and a sulfur atom than in specimens using a single compound having a phenol structure and specimens using a combination of a compound having a phenol structure and a phosphite compound. In addition, it is evident that discoloration due to aging is smaller in the specimens of examples 3 and 4 than in the specimens of examples 1 and 2, respectively. From these results, it is evident that an antioxidant containing a compound having both a phenol structure and a sulfur atom in the same molecule is superior to an antioxidant containing two compounds of a compound having a phenol structure and a compound having a sulfur atom.

Next, specimens of examples 5 to 10 and comparative example 6 were manufactured in the same manner as those of the above examples, using blending amounts in Table 2. However, as the latex, NL105 manufactured by LG Japan Lab Inc. (solid fraction (amount of elastomer) 45% by weight) was used instead of BST8503S. As the organic crosslinking agent, a polycarbodiimide crosslinking agent ("V-02-L2" (trade name) manufactured by Nisshinbo Chemical Inc.: solid fraction (amount of polycarbodiimide) 40.0%, number of carbodiimide functional groups per molecule: 9.4) was used instead of the polyepoxy crosslinking agent (EX-321: solid fraction 50%). As the antioxidant, an antioxidant (Phe2), the above antioxidant (Phe1+Sul)1, an antioxidant (Phe1+Sul)2, and the above antioxidant (Phe/Sul) were used. Note that Table 2 shows blending amounts in terms of the solid fraction equivalent.

Antioxidant (Phe2)
Dispersion in which Phe2 is dispersed in an aqueous solvent
Solid fraction (amount of Phe2) 50% by weight
Phe2: Wingstay (registered trademark) L (butylated reaction product of p-cresol with dicyclopentadiene and isobutylene: CAS No. 68610-51-5) (a compound having a phenol structure)
Antioxidant (Phel +Sul)2
Dispersion in which Phe1 and Sul are dispersed in an aqueous solvent
Solid fraction (total amount of Phe1 and Sul) 52.8% by weight
Phe1: see above
Sul: see above

The amount of Sul relative to the total amount of Phe1 and Sul is 50% by weight.

[Evaluation]

(Color difference measurement)

The color difference was measured in the same manner as described above.

(Elongation at break)

For the specimens of examples 5 to 10 and comparative example 6, No. 5 dumbbell specimens according to JIS K6251 were cut out, and the elongation at break was measured using a TENSILON universal tensile tester RTC-1310A manufactured by A&D Company, Limited at a test speed of 500 mm/min, a chuck distance of 75 mm, and a gauge length of 25 mm. The elongation at break was obtained based on the formula below.

Elongation at break (%) = 100 × (gauge length at break in tensile test - gauge length before tensile test) / gauge length before tensile test

[Table 2]

| | | Example 5 | Example 6 | Example 7 | Example 8 | Example 9 | Example 10 | Comparative example 6 |
|---|---|---|---|---|---|---|---|---|
| Latex | phr | 100 | 100 | 100 | 100 | 100 | 100 | 100 |
| Polycarbodiimide crosslinking agent | phr | 1.0 | 1.0 | 1.0 | 1.0 | 1.0 | 1.0 | 1.0 |
| Zinc oxide ZnO | phr | 1.0 | 1.0 | 1.0 | 1.0 | 1.0 | 1.0 | 1.0 |

(continued)

| | | | Example 5 | Example 6 | Example 7 | Example 8 | Example 9 | Example 10 | Comparative example 6 |
|---|---|---|---|---|---|---|---|---|---|
| Titanium oxide TiO2 | | phr | 2.0 | 2.0 | 2.0 | 2.0 | 2.0 | 2.0 | 2.0 |
| Antioxidant (Phe2) | | phr | - | - | - | - | - | - | 1.0 |
| Antioxidant (Phe1+Sul) 1 | | phr | 1.0 | 0.2 | - | - | - | - | - |
| Antioxidant (Phe1+Sul) 2 | | phr | - | - | 1.0 | 0.2 | - | - | - |
| Antioxidant (Phe/Sul) | | phr | - | - | - | - | 1.0 | 0.2 | - |
| Color difference (ΔE) | 0 days | - | 0.00 | 0.00 | 0.00 | 0.00 | 0.00 | 0.00 | 0.00 |
| | 5 days | - | 1.98 | 3.99 | 4.77 | 6.79 | 1.86 | 3.66 | 7.32 |
| | 11 days | - | 4.27 | 10.80 | 14.37 | 18.56 | 4.06 | 9.90 | 20.46 |
| Elongation at break | 0 days | % | 628 | 623 | 622 | 622 | 630 | 629 | 624 |
| | 5 days | % | 631 | 624 | 622 | 610 | 647 | 622 | 626 |
| | 11 days | % | 614 | 576 | 597 | 564 | 633 | 587 | 558 |

As shown in Table 2 and FIGS. 3 and 4, it is evident that specimens of examples 5 to 10 have a smaller color difference beforr and after aging and have better elongation at break after aging than the specimen of comparative example 6. From these results, it is evident that the specimens using an antioxidant containing at least one compound having a phenol structure and a sulfur atom have a smaller discoloration due to aging and a smaller deterioration of physical properties than the specimens using a single compound having a phenol structure. Furthermore, it is evident that the specimens of examples 9 and 10 have a smaller discoloration due to aging and have a better elongation at break after aging than the specimens of respective examples 5 and 6, and respective examples 7 and 8. From these results, it is evident that an antioxidant containing a compound having both a phenol structure and a sulfur atom in the same molecule is superior to specimens using an antioxidant containing two compounds of a compound having a phenol structure and a compound having a sulfur atom. It is evident that the specimens of examples 5 and 6 have a smaller discoloration due to aging than the specimens of examples 7 and 8, respectively. From these results, it is evident that the amount of the compound having a sulfur atom is preferably greater than the amount of the compound having a phenol structure.

Next, the specimens of example 11 and comparative example 7 were manufactured as follows, and chlorination was performed.

(Manufacturing of composition for dip forming)

An amount of 300 g of latex containing XNBR (NL151 manufactured by LG Japan Lab Inc., solid fraction (amount of elastomer) 45% by weight) was placed in a 1L beaker (manufactured by AS ONE CORPORATION, body diameter 105 mm × height 150 mm). The latex was diluted with 100 g of water, and stirring was started. The pH of the latex was preliminarily adjusted to 9.9 using a 5% by weight aqueous solution of potassium hydroxide. Subsequently, a polyepoxy crosslinking agent (Denacol EX-321, solid fraction (amount of epoxy compound) 50% by weight), an aluminum crosslinking agent (polynuclear aluminum compound: solid fraction (amount of aluminum compound) 3.6%), titanium oxide as a white pigment ("PW-601" (trade name) manufactured by Farben Technique (M) Sdn Bhd.: solid fraction (amount of titanium oxide) 71.4% by weight), an antioxidant (Phe3), and the above antioxidant (Phe1+Sul)1 were added as shown in Table 3, water was added so that the solid fraction concentration was 30%, and the composition for dip forming was manufactured by performing stirring and mixing all night. The composition for dip forming was kept stirred in a beaker until it was used. Note that Table 3 shows the blend amounts in terms of the solid fraction equivalent.

Antioxidant (Phe3): "CVOX-50" (trade name) manufactured by Farben Technique (M) Sdn Bhd.
Dispersion in which Phe3 is dispersed in an aqueous solvent
Solid fraction (amount of Phe3) 52.88% by weight
Phe3: butylation reaction product of p-cresol with dicyclopentadiene and isobutylene: CAS No. 68610-51-5 (a compound having a phenol structure)

[Table 3]

| | | Example 11 | Comparative example 7 |
|---|---|---|---|
| Latex | phr | 100 | 100 |
| Epoxy crosslinking agent | phr | 0.5 | 0.5 |
| Aluminum crosslinking agent | phr | 0.3 | 0.3 |
| Titanium oxide TiO2 | phr | 1.5 | 1.5 |
| Antioxidant (Phe3) | phr | 0.2 | 0.2 |
| Antioxidant (Phe1+Sul)1 | phr | 1.0 | - |

(Preparation of coagulating solution)

An amount of 19.6 g of a release agent was diluted about 2 times using part of 30 g of water previously weighed. Then, the diluted solution of the release agent was then slowly added to a solution in which 0.56 g of a surfactant was dissolved in 42.0 g of water. "Teric320" (trade name) manufactured by Huntsman Corporation was used as the surfactant. "S-9" (trade name) manufactured by CRESTAGE INDUSTRY SDN BHD. (solid fraction concentration 25.46% by weight) was used as the release agent. The total amount of S-9 remaining in the vessel was added while rinsed with remaining water, and stirring was performed for 3 to 4 hours to prepare an S-9 dispersion.

Next, an aqueous solution of calcium nitrate obtained by dissolving 143.9 g of calcium nitrate tetrahydrate in 153.0 g of water was prepared in a 1L beaker (manufactured by AS ONE CORPORATION, body diameter 105 mm × height 150 mm), and while the aqueous solution of calcium nitrate was stirred, the previously prepared S-9 dispersion was added thereto. The pH of this solution was adjusted to 8.5 to 9.5 using a 5% ammonia water, and water was added so that, ultimately, the calcium nitrate as an anhydride was 30% and the solid fraction concentration of S-9 was 1.2%, and 500 g of a coagulating solution was obtained. The resultant coagulating solution was kept stirred in a 1L beaker until it was used.

(Manufacturing of curable film)

The coagulating solution obtained as described above was warmed to about 50 °C while stirred, filtered through a 200-mesh nylon filter, and placed in a dipping vessel. Then, a plate made from ceramic (200 × 80 × 3 mm, hereinafter referred to as "ceramic plate") that was washed and then warmed to 60 °C was dipped in the coagulating solution (coagulating solution adhesion step). Specifically, once the tip of the ceramic plate was brought into contact with the surface of the coagulating solution, the ceramic plate was dipped to a position of 18 cm from the tip thereof over a period of 10 seconds, kept dipped for 5 seconds, and then pulled out over a period of 5 seconds. The coagulating solution adhered to the surface of the ceramic plate was quickly shaken off, and the surface of the ceramic plate was dried. After drying, the ceramic plate was warmed up to 60 °C again in preparation for subsequent dipping in the composition for dip forming.

The above composition for dip forming was filtered through a 200-mesh nylon filter at room temperature and placed in a dipping vessel, and the ceramic plate at 60 °C to which the coagulating solution was adhered was dipped in the composition for dip forming. Specifically, the ceramic plate was dipped over a period of 10 seconds, held for 5 seconds, and then pulled out over a period of 5 seconds. The composition for dip forming was held in the air until it stopped dripping, and droplets of the composition for dip forming adhering to the tip were lightly shaken off.

The ceramic plate that had been dipped in the composition for dip forming was dried at 50 °C for 2 minutes (gelling step) and washed with hot water at 50 °C for 2 minutes (leaching step). The ceramic plate was then dried at 70 °C for 5 minutes (pre-curing step) and heat-cured at 130 °C for 30 minutes (curing step). After the curing step, washing with hot water at 50 °C was performed for 2 minutes (post-leaching step).

(Chlorination)

After the post-leaching step, dipping in chlorine water adjusted to 800 ppm was performed for 20 seconds as an online chlorination. Then, neutralization treatment was performed using an aqueous solution prepared with sodium carbonate, sodium thiosulfate, and hypochlorous acid, washing with water was performed 3 times, and drying in an oven at 70 °C was performed for 15 minutes. Then, the glove was removed from the hand mold and stored at a temperature of about 20 to 35 °C for 1 week. Afterward, the glove was dipped in chlorine water prepared at the concentration shown in Table 4 for a predetermined period of time, thereby performing offline chlorination. After taking out the glove from the chlorine water, the glove was subjected to neutralization treatment with an aqueous solution prepared with sodium carbonate, sodium thiosulfate, and hypochlorous acid as in the case of online chlorination, was washed about 3 times with

water, and was dried in an oven at 70 °C for 15 minutes.

[Evaluation]

The thickness of the gloves subjected to chlorination as described above was measured according to the requirements of ASTM-6319-00. In addition, the tensile strength at break (TSB) of the gloves subjected to chlorination was measured according to the requirements of ASTM D412. These results are shown in Table 4.

[Table 4]

| | Chlorine water concentration (ppm) | Dipping time (min) | Thickness (mm) | Tensile strength at break (MPa) |
|---|---|---|---|---|
| Example 11 | 0 | 0 | 0.132 | 19.2 |
| | 400 | 5 | 0.134 | 19.5 |
| | 400 | 10 | 0.131 | 18.6 |
| Comparative example 7 | 0 | 0 | 0.127 | 17.1 |
| | 400 | 5 | 0.124 | 11.6 |
| | 400 | 10 | 0.126 | 10.6 |

As shown in Table 4 and FIG. 5, even when the gloves of example 11 were subjected to chlorination, the tensile strength thereof was not significantly affected. In contrast, it was evident that the gloves of comparative example 7 exhibited a tendency for the tensile strength at break to decrease due to chlorination. From these results, it is evident that the resistance to chlorination is also improved by an antioxidant containing at least one compound having a phenol structure and a sulfur atom.

Radicals are generated in elastomers through chlorination, and the physical properties of elastomers may deteriorate due to these radicals. In contrast, since the physical properties of the gloves of example 11 did not deteriorate even when subjected to chlorination, it is presumed that the radicals generated through chlorination are decomposed. Such gloves are also considered to be capable of suppressing at least one of the deterioration of mechanical properties over time or yellowing over time. That is, compared with sulfur-crosslinked gloves, the sulfur-free crosslinked gloves is thought to be possible to prevent to undergo rapid aging due to heat and chlorination, and consequently, prevent the deterioration of tensile strength, elongation, softness, and the yellowing of gloves from occurring during the storage period before use.

The entire contents of Japanese Patent Application No. 2022-076972 (filed May 9, 2022) and No. 2023-003683 (filed January 13, 2023) are incorporated herein by reference.

Although the present embodiment has been described above, the present embodiment is not limited thereto, and various modifications are possible within the scope of the gist of the present embodiment.

INDUSTRIAL APPLICABILITY

The present disclosure provides a glove capable of suppressing yellowing and deterioration of mechanical properties such as tensile strength, elongation, and softness over time due to aging of accelerator-free gloves caused by heat or chlorination, and provides a composition for dip-forming used for manufacturing the glove, and methods for manufacturing a composition for dip forming and a glove.

**Claims**

**1.** A sulfur-free crosslinked composition for dip forming, comprising:

a carboxylated diene rubber elastomer;
a crosslinking agent that contains at least one of an organic crosslinking agent or a metal crosslinking agent with a valence of two or more;
an antioxidant that contains at least one compound having a phenol structure and a sulfur atom; and
water, wherein
an amount of the at least one compound is 0.05 to 4 parts by weight relative to 100 parts by weight of the elastomer.

**2.** The composition for dip forming according to claim 1, wherein
the carboxylated diene rubber elastomer is an elastomer containing, in a polymer main chain, a structural unit derived from (meth)acrylonitrile, a structural unit derived from an unsaturated carboxylic acid, and a structural unit derived from butadiene.

**3.** The composition for dip forming according to claim 1 or 2, wherein the at least one compound contains at least one compound that has: the phenol structure; and at least one selected from the group consisting of a thioether structure, a polysulfide structure, and a thiol structure.

**4.** The composition for dip forming according to any one of claims 1 to 3, wherein the at least one compound contains at least one compound that has: the phenol structure; and a thioether structure or a polysulfide structure.

**5.** The composition for dip forming according to any one of claims 1 to 4, wherein the at least one compound contains a compound that has both of the phenol structure and the sulfur atom in a same molecule.

**6.** The composition for dip forming according to any one of claims 1 to 5, wherein the at least one compound contains two or more compounds of a compound having the phenol structure and a compound having the sulfur atom.

**7.** The composition for dip forming according to any one of claims 1 to 6, wherein the organic crosslinking agent contains at least one of polycarbodiimide or an epoxy compound.

**8.** The composition for dip forming according to any one of claims 1 to 7, wherein the metal crosslinking agent with a valence of two or more contains at least one of a zinc compound or an aluminum compound.

**9.** A method for manufacturing a sulfur-free crosslinked composition for dip forming, the method comprising:

a step of mixing a carboxylated diene rubber elastomer, a crosslinking agent containing at least one of an organic crosslinking agent or a metal crosslinking agent with a valence of two or more, and an antioxidant containing at least one compound having a phenol structure and a sulfur atom, wherein
an amount of the at least one compound is 0.05 to 4 parts by weight relative to 100 parts by weight of the elastomer, and
the at least one compound is added to the elastomer in a dispersion state dispersed in an aqueous solvent.

**10.** The method for manufacturing a composition for dip forming according to claim 9, wherein
the carboxylated diene rubber elastomer is an elastomer having, in a polymer main chain, a structural unit derived from (meth)acrylonitrile, a structural unit derived from an unsaturated carboxylic acid, and a structural unit derived from butadiene.

**11.** A glove, comprising:

a sulfur-free crosslinked elastomer that is a carboxylated diene rubber elastomer;
a crosslinking agent that contains at least one of an organic crosslinking agent or a metal crosslinking agent with a valence of two or more; and
an antioxidant that is dispersed in the sulfur-free crosslinked elastomer, and contains at least one compound having a phenol structure and a sulfur atom, wherein
an amount of the at least one compound is 0.05 to 4 parts by weight relative to 100 parts by weight of the sulfur-free crosslinked elastomer.

**12.** The glove according to claim 11, wherein
the carboxylated diene rubber elastomer is a sulfur-free crosslinked elastomer containing, in a polymer main chain, a structural unit derived from (meth)acrylonitrile, a structural unit derived from an unsaturated carboxylic acid, and a structural unit derived from butadiene.

**13.** A method for manufacturing a glove, comprising:
a step of dip-forming the glove with the composition for dip forming according to claim 1 or 2.

FIG. 1

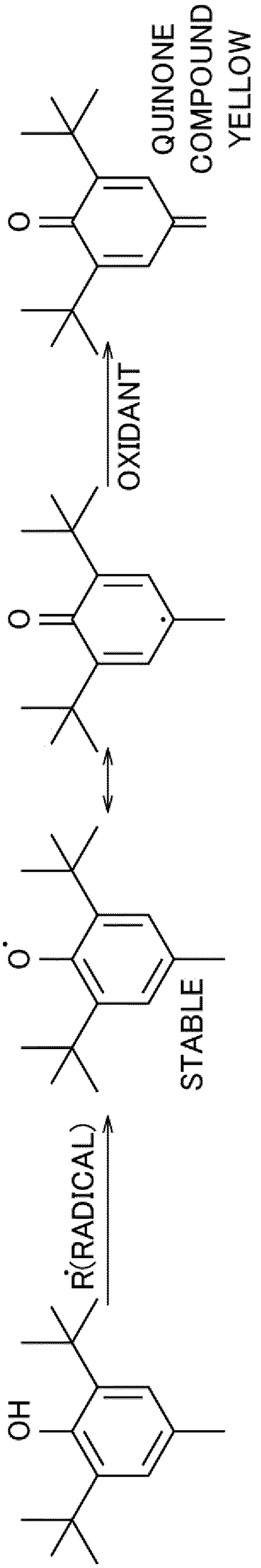

FIG. 2

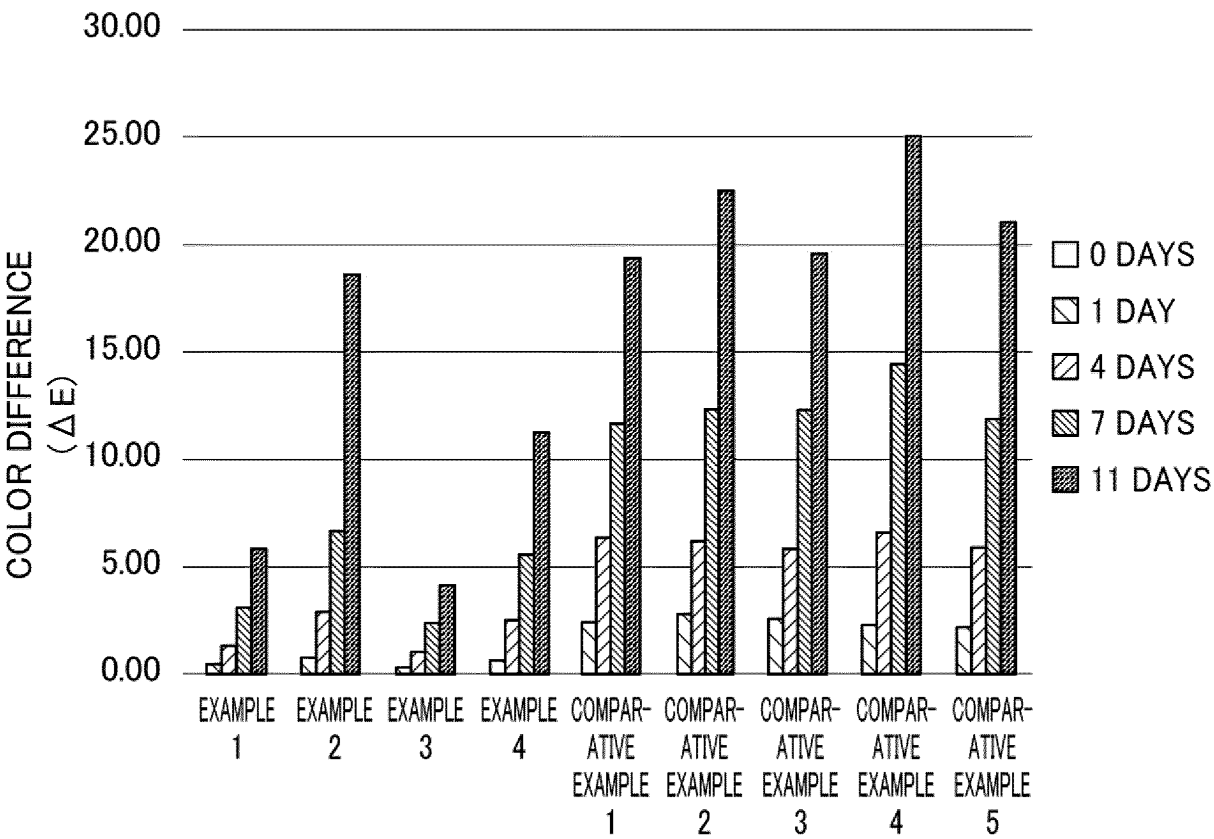
30.00
25.00
20.00
15.00
10.00
5.00
0.00
COLOR DIFFERENCE (ΔE)
0 DAYS
1 DAY
4 DAYS
7 DAYS
11 DAYS
EXAMPLE 1
EXAMPLE 2
EXAMPLE 3
EXAMPLE 4
COMPAR-ATIVE EXAMPLE 1
COMPAR-ATIVE EXAMPLE 2
COMPAR-ATIVE EXAMPLE 3
COMPAR-ATIVE EXAMPLE 4
COMPAR-ATIVE EXAMPLE 5

FIG. 3

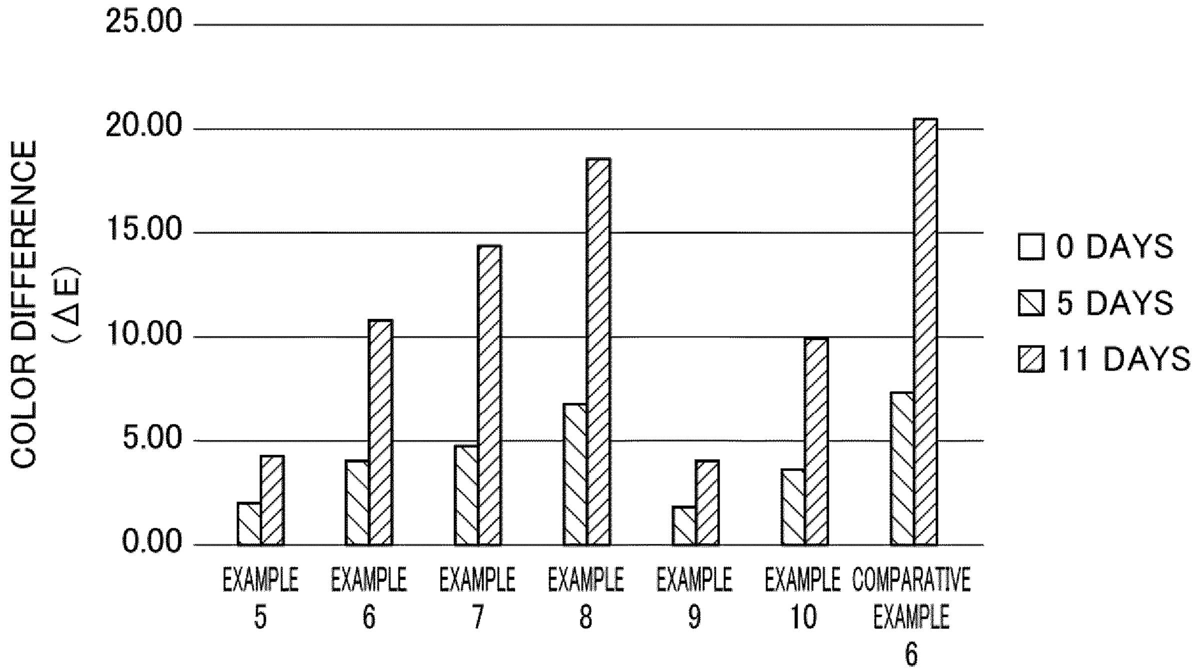
25.00
20.00
15.00
10.00
5.00
0.00
COLOR DIFFERENCE (ΔE)
0 DAYS
5 DAYS
11 DAYS
EXAMPLE 5
EXAMPLE 6
EXAMPLE 7
EXAMPLE 8
EXAMPLE 9
EXAMPLE 10
COMPARATIVE EXAMPLE 6

FIG. 4

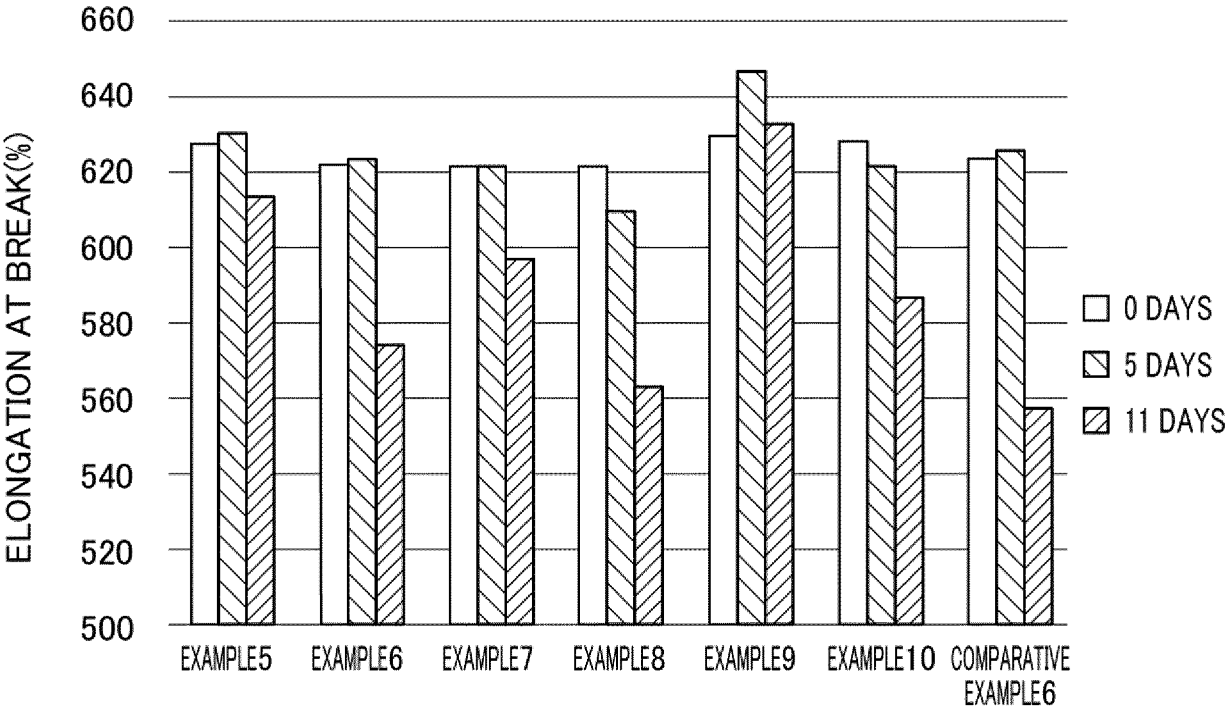
660
640
620
600
580
560
540
520
500
ELONGATION AT BREAK(%)
EXAMPLE5
EXAMPLE6
EXAMPLE7
EXAMPLE8
EXAMPLE9
EXAMPLE10
COMPARATIVE EXAMPLE6
0 DAYS
5 DAYS
11 DAYS

FIG. 5

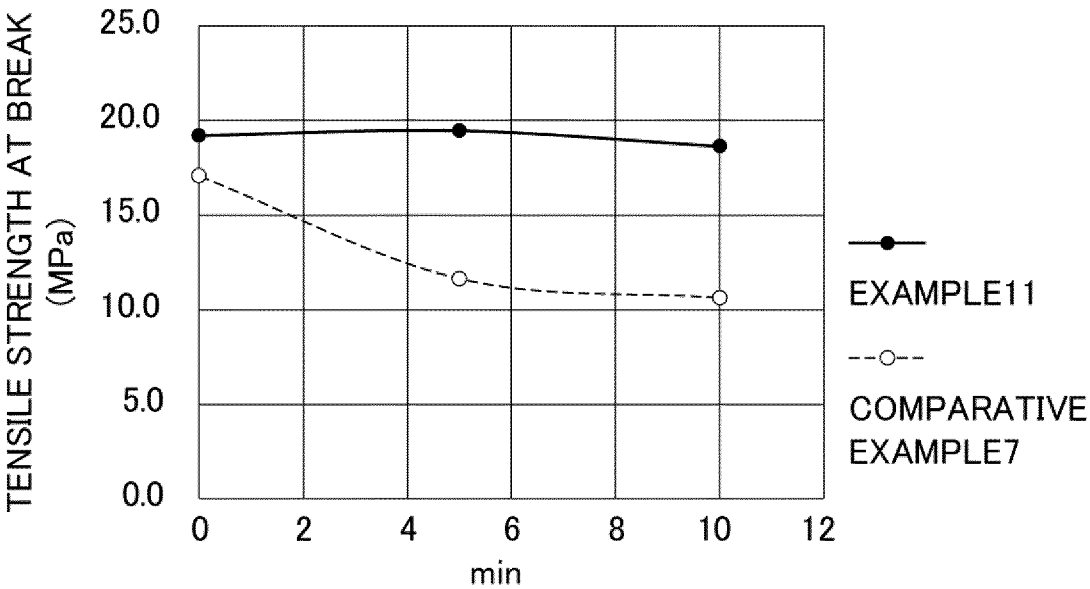
TENSILE STRENGTH AT BREAK (MPa)
25.0
20.0
15.0
10.0
5.0
0.0
0
2
4
6
8
10
12
min
EXAMPLE11
COMPARATIVE EXAMPLE7

**INTERNATIONAL SEARCH REPORT**

International application No. **PCT/JP2023/017315**

**A. CLASSIFICATION OF SUBJECT MATTER**

***C08L 9/04***(2006.01)i; ***A41D 19/04***(2006.01)i; ***B29C 41/14***(2006.01)i; ***C08J 3/20***(2006.01)i; ***C08J 5/02***(2006.01)i; ***C08K 3/22***(2006.01)i; ***C08K 5/00***(2006.01)i; ***C08K 5/29***(2006.01)i; ***C08K 5/36***(2006.01)i; ***C08L 63/00***(2006.01)i; ***C08L 101/02***(2006.01)i

FI: C08L9/04; C08L101/02; C08K5/00; C08K3/22; C08K5/29; C08L63/00 C; C08K5/36; A41D19/04 B; C08J3/20 B CEQ; C08J3/20 CEY; C08J5/02 CEQ; B29C41/14

According to International Patent Classification (IPC) or to both national classification and IPC

**B. FIELDS SEARCHED**

Minimum documentation searched (classification system followed by classification symbols)

C08L9/04; A41D19/04; B29C41/14; C08J3/20; C08J5/02; C08K3/22; C08K5/00; C08K5/29; C08K5/36; C08L63/00; C08L101/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/024672 A1 (NIPPON ZEON CO.) 03 February 2022 (2022-02-03) | 1-13 |
| A | JP 2006-502024 A (REGENT MEDICAL LTD.) 19 January 2006 (2006-01-19) | 1-13 |
| A | WO 2021/010334 A1 (MIDORI ANZEN CO., LTD.) 21 January 2021 (2021-01-21) | 1-13 |

☐ Further documents are listed in the continuation of Box C.　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/017315**

| Patent document cited in search report | Publication date (day/month/year) | Patent family member(s) | Publication date (day/month/year) |
|---|---|---|---|
| WO 2022/024672 A1 | 03 February 2022 | CN 115803387 A | |
| JP 2006-502024 A | 19 January 2006 | US 2004/0071909 A1 | |
| | | WO 2004/033177 A1 | |
| | | EP 1549476 A1 | |
| | | CN 1713975 A | |
| WO 2021/010334 A1 | 21 January 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11509873 W
- WO 2020066835 A
- JP 2017213914 A
- WO 2019102985 A
- JP 2022076972 A
- JP 2023003683 A


### Non-patent literature cited in the description


- **TETSUYA AKABANE**. Production Method and Market Trend of Rubber Gloves. *Journal of THE SOCIETY OF RUBBER SCIENCE AND TECHNOLOGY, JAPAN*, 2015, vol. 88 (9)
- **NORIHIDE ENOMOTO**. Development of Accelerator-Free Nitrile Glove. *Manufacturing & Technology*, 2016, vol. 68 (4)
- *CHEMICAL ABSTRACTS*, 110553-27-0
- *CHEMICAL ABSTRACTS*, 991-84-4
- *CHEMICAL ABSTRACTS*, 41484-35-9
- *CHEMICAL ABSTRACTS*, 96-69-5
- *CHEMICAL ABSTRACTS*, 68610-51-5
- *CHEMICAL ABSTRACTS*, 27676-62-6
- *CHEMICAL ABSTRACTS*, 85-60-9
- *CHEMICAL ABSTRACTS*, 2082-79-3
- *CHEMICAL ABSTRACTS*, 6683-19-8
- *CHEMICAL ABSTRACTS*, 128-37-0
- *CHEMICAL ABSTRACTS*, 128-39-2
- *CHEMICAL ABSTRACTS*, 88-26-6
- *CHEMICAL ABSTRACTS*, 1879-09-0
- *CHEMICAL ABSTRACTS*, 25013-16-5
- *CHEMICAL ABSTRACTS*, 119-47-1
- *CHEMICAL ABSTRACTS*, 88-24-4
- *CHEMICAL ABSTRACTS*, 35074-77-2
- *CHEMICAL ABSTRACTS*, 1709-70-2
- *CHEMICAL ABSTRACTS*, 36443-68-2
- *CHEMICAL ABSTRACTS*, 121-00-6
- *CHEMICAL ABSTRACTS*, 1843-03-4
- *CHEMICAL ABSTRACTS*, 90498-90-1
- *CHEMICAL ABSTRACTS*, 123-28-4
- *CHEMICAL ABSTRACTS*, 16545-54-3
- *CHEMICAL ABSTRACTS*, 1462-52-8
- *CHEMICAL ABSTRACTS*, 693-36-7
- *CHEMICAL ABSTRACTS*, 111-17-1
- *CHEMICAL ABSTRACTS*, 29598-76-3
- *CHEMICAL ABSTRACTS*, 66534-05-2
- *CHEMICAL ABSTRACTS*, 31570-04-4
- *CHEMICAL ABSTRACTS*, 10595-72-9